(19) Europäisches Patentamt
European Patent Office
Office européen des brevets

(11) EP 3 455 647 B1

(12) EUROPÄISCHE PATENTSCHRIFT

(45) Veröffentlichungstag und Bekanntmachung des Hinweises auf die Patenterteilung:
01.10.2025 Patentblatt 2025/40

(21) Anmeldenummer: 17724782.2

(22) Anmeldetag: 09.05.2017

(51) Internationale Patentklassifikation (IPC):
G01S 13/42 (2006.01)    G01S 13/93 (2020.01)

(52) Gemeinsame Patentklassifikation (CPC):
G01S 13/42; G01S 13/931

(86) Internationale Anmeldenummer:
PCT/EP2017/060995

(87) Internationale Veröffentlichungsnummer:
WO 2017/194503 (16.11.2017 Gazette 2017/46)

(54) **RADARSENSOREINRICHTUNG FÜR EIN KRAFTFAHRZEUG, FAHRERASSISTENZSYSTEM, KRAFTFAHRZEUG SOWIE VERFAHREN ZUM ERFASSEN EINES OBJEKTS**

RADAR SENSOR DEVICE FOR A MOTOR VEHICLE, DRIVER ASSISTANCE SYSTEM, MOTOR VEHICLE AND METHOD FOR DETECTING AN OBJECT

DISPOSITIF DE DÉTECTION RADAR POUR UN VÉHICULE AUTOMOBILE, SYSTÈME D'AIDE À LA CONDUITE, VÉHICULE AUTOMOBILE AINSI QUE PROCÉDÉ DE DÉTECTION D'UN OBJET

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 12.05.2016 DE 102016108756

(43) Veröffentlichungstag der Anmeldung:
20.03.2019 Patentblatt 2019/12

(73) Patentinhaber: Valeo Schalter und Sensoren GmbH
74321 Bietigheim-Bissingen (DE)

(72) Erfinder:
• STURM, Christian
74321 Bietigheim-Bissingen (DE)
• MALIK, Waqas
74321 Bietigheim-Bissingen (DE)
• SICKINGER, Frank
74321 Bietigheim-Bissingen (DE)
• PAPZINER, Uwe
74321 Bietigheim-Bissingen (DE)

(74) Vertreter: Jauregui Urbahn, Kristian
Valeo Schalter und Sensoren GmbH
CDA-IP
Laiernstraße 12
74321 Bietigheim-Bissingen (DE)

(56) Entgegenhaltungen:
EP-A1- 1 416 584          EP-A1- 2 330 685
DE-A1- 102004 059 915     DE-A1- 102007 061 738
DE-A1- 102008 029 613     DE-A1- 102011 078 641
DE-A1- 102013 216 951     DE-A1- 102015 102 519
US-B1- 6 184 819

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Radarsensoreinrichtung für ein Kraftfahrzeug zum Erfassen eines Objektes in einem Umgebungsbereich des Kraftfahrzeugs, mit einer Antennenkonfiguration aufweisend zumindest zwei Sendeantennen zum Aussenden von Sendesignalen, wobei jeweilige Hauptstrahlrichtungen von Sendecharakteristiken der zumindest zwei Sendeantennen unterschiedliche Elevationswinkel und unterschiedliche Azimutwinkel aufweisen. Die Erfindung betrifft außerdem ein Fahrerassistenzsystem, ein Kraftfahrzeug sowie ein Verfahren.

Radarsensoreinrichtungen werden üblicherweise in Kraftfahrzeugen eingesetzt, um Objekte beziehungsweise Hindernisse in einem Umgebungsbereich des Kraftfahrzeugs zu detektieren. Dazu weisen die Radarsensoreinrichtungen beziehungsweise Radarsensoren Sendeantennen auf, welche Sendesignale in Form von elektromagnetischen Wellen aussenden. Die ausgesendeten Sendesignale werden an einem Objekt in dem Umgebungsbereich reflektiert und die reflektierten Sendesignale werden als Empfangssignale beziehungsweise Echosignale von den Sendeantennen selbst oder von einer separaten Empfangsantenne wieder empfangen. Aus den Sendesignalen und den Empfangssignalen können Informationen über das Objekt, beispielsweise eine Position des Objektes zu dem Kraftfahrzeug und eine Geschwindigkeit des Objektes sowie ein Winkel des Objektes zu dem Kraftfahrzeug gewonnen werden. Dabei werden sowohl horizontale Winkel beziehungsweise Azimutwinkel also auch vertikale Winkel beziehungsweise Elevationswinkel erfasst. Ein solcher zur winkelauflösenden Ortung von Objekten verwendeter Radarsensor ist beispielsweise aus der WO 2015/028175 A1 bekannt. Dieser Radarsensor umfasst zwei Sendeantennen, bei welchen sich die Sendeantennen in ihrer Wirkrichtung in Elevation und im Azimut unterscheiden. Eine ähnliche Radarvorrichtung mit mehreren Sende- und Empfangsantennen ist in DE102013216951A1 offenbart.

Diese Informationen können einem Fahrerassistenzsystem des Kraftfahrzeugs, beispielsweise einem Abstandsregeltempomaten, einem Spurwechselassistenten oder dergleichen, zugeführt werden. Auch bei automatischen Notbremsassistenten werden Informationen von Radarsensoren genutzt, um bei einer drohenden Kollision des Kraftfahrzeugs mit einem Hindernis automatische Notbremsvorgänge einzuleiten. Für diese Anwendung ist jedoch eine Elevationswinkelmessung der Objekte besonders wichtig, da keine Notbremsung für überfahrbare, am Boden befindliche Objekte, beispielsweise Kanaldeckel, oder unterfahrbare Objekte, beispielsweise Schilderbrücken, erfolgen darf. Solche Objekte reflektieren aufgrund ihres Materials und ihrer Form das Sendesignal beziehungsweise Radarsignal gut, stellen aber für das Kraftfahrzeug keinerlei Hindernis dar.

Es ist Aufgabe der vorliegenden Erfindung, eine Lösung bereitzustellen, wie Elevationswinkel und Azimutwinkel von Objekten in einem Umgebungsbereich eines Kraftfahrzeugs besonders genau und zuverlässig bestimmt werden können.

Diese Aufgabe wird erfindungsgemäß durch eine Radarsensoreinrichtung, ein Fahrerassistenzsystem, ein Kraftfahrzeug sowie ein Verfahren mit den Merkmalen gemäß den jeweiligen unabhängigen Ansprüchen gelöst. Vorteilhafte Ausführungen der Erfindung sind Gegenstand der abhängigen Patentansprüche, der Beschreibung und der Figuren.

In einer Ausführungsform einer erfindungsgemäßen Radarsensoreinrichtung, welche zum Erfassen eines Objektes in einem Umgebungsbereich eines Kraftfahrzeugs dient, weist diese eine Antennenkonfiguration auf, wobei die Antennenkonfiguration insbesondere zumindest zwei Sendeantennen zum Aussenden von Sendesignalen umfasst. Insbesondere weisen jeweilige Hauptstrahlrichtungen von Sendecharakteristiken der zumindest zwei Sendeantennen unterschiedliche Elevationswinkel und unterschiedliche Azimutwinkel auf. Darüber hinaus weist die Antennenkonfiguration insbesondere zumindest zwei, zu den Sendeantennen separate Empfangsantennen zum Empfangen der in dem Umgebungsbereich reflektierten Sendesignale als Empfangssignale auf, wobei jeweilige Hauptstrahlrichtungen von Empfangscharakteristiken der zumindest zwei Empfangsantennen unterschiedliche Elevationswinkel aufweisen.

Bevorzugt weist eine Radarsensoreinrichtung für ein Kraftfahrzeug zum Erfassen eines Objektes in einem Umgebungsbereich des Kraftfahrzeugs eine Antennenkonfiguration auf, welche zumindest zwei Sendeantennen zum Aussenden von Sendesignalen umfasst. Jeweilige Hauptstrahlrichtungen von Sendecharakteristiken der zumindest zwei Sendeantennen weisen unterschiedliche Elevationswinkel und unterschiedliche Azimutwinkel auf. Darüber hinaus weist die Antennenkonfiguration zumindest zwei, zu den Sendeantennen separate Empfangsantennen zum Empfangen der in dem Umgebungsbereich reflektierten Sendesignale als Empfangssignale auf, wobei jeweilige Hauptstrahlrichtungen von Empfangscharakteristiken der zumindest zwei Empfangsantennen unterschiedliche Elevationswinkel aufweisen.

Solche Radarsensoreinrichtungen können am Kraftfahrzeug angeordnet sein, wobei eine Radarsensoreinrichtung beispielsweise in einem Frontbereich des Kraftfahrzeugs angeordnet sein kann und eine weitere Radarsensoreinrichtung in einem Heckbereich des Kraftfahrzeugs angeordnet sein kann. Mittels der Radarsensoreinrichtung können insbesondere ein Azimutwinkel des Objektes sowie ein Elevationswinkel des Objektes bestimmt werden. Der Azimutwinkel ist dabei insbesondere ein horizontaler Winkel in einer horizontalen Ebene, welche beispielsweise von einer Fahrzeuglängsachse und einer Fahrzeugquerachse aufgespannt wird. Der Azimutwinkel wird dabei auf eine Bezugsachse, beispielsweise die Fahrzeuglängsachse, bezogen. Der Elevationswinkel ist ein vertikaler Winkel in einer vertikalen Ebene, welche beispielsweise von der Fahrzeuglängsachse und einer Fahrzeughochachse aufgespannt wird. Der Elevationswinkel wird ebenfalls auf eine Bezugsachse, beispielsweise ebenfalls auf die Fahrzeuglängsachse, bezogen. Die Bezugsachse für die Elevation erstreckt sich dabei insbesondere auf Einbauhöhe der Radarsensoreinrichtung am Kraftfahrzeug parallel zu einer Fahrbahn des Kraftfahrzeugs. Der Elevationswinkel beschreibt eine Höhe des Objektes über einer Fahrbahn des Kraftfahrzeugs.

Dabei ist es vorgesehen, dass die Radarsensoreinrichtung die Antennenkonfiguration aufweist, welche mehrere Sende- und Empfangsantennen umfasst. Die Sende- und Empfangsantennen können beispielsweise separat zueinander auf einem gemeinsamen Antennenboard angeordnet sein. Die Sendeantennen und die Empfangsantennen können dabei jeweils eine Gruppe von Antennenelementen aufweisen. Dabei ist es insbesondere vorgesehen, dass die Sendeantennen sukzessive zur Durchführung der Messungen genutzt werden, wohingegen die Empfangsantennen simultan zur Durchführung der Messungen genutzt werden. Mit anderen Worten bedeutet dies, dass die Sendeantennen nacheinander zum Aussenden eines jeweiligen Sendesignals angesteuert werden, wobei alle Empfangsantennen gleichzeitig zum Empfangen des von der jeweiligen aktiven Sendeantenne ausgesendeten reflektierten Sendesignals angesteuert werden. Mittels eines sogenannten digitalen Beamforming können die Empfangsantennen den Azimutwinkel messen. Der Azimutwinkel wird dabei insbesondere aus einer Phasenverschiebung zwischen dem ausgesendeten Sendesignal und dem empfangenen Empfangssignal bestimmt. Der Elevationswinkel wird insbesondere aus einem Leistungsvergleich von Signalpegeln beziehungsweise Amplituden des ausgesendeten Sendesignals und des empfangenen Empfangssignals bestimmt.

Die zwei Sendeantennen weisen dabei sowohl im Azimut als auch in Elevation unterschiedliche Richtwirkungen auf. Die Richtwirkung im Azimut ergibt sich aus einem horizontalen Antennendiagramm, welches die Richtcharakteristiken der Sendeantennen beziehungsweise die Sendecharakteristiken in der horizontalen Ebene beschreibt. Im Azimut weisen dabei die Sendeantennen unterschiedliche Horizontalkomponenten der Hauptstrahlrichtungen auf, entlang welcher die Richtcharakteristiken, insbesondere Hauptkeulen der Richtcharakteristiken, orientiert sind. Die Hauptstrahlrichtungen der Sendecharakteristiken weisen also unterschiedliche Azimutwinkel zu der Bezugsachse auf. Die Sendecharakteristiken sind also um den jeweiligen Azimutwinkel horizontal bezüglich der Bezugsachse verschwenkt. Die Richtwirkung in Elevation ergibt sich aus einem vertikalen Antennendiagramm, welches die Richtcharakteristiken der Sendeantennen in der vertikalen Ebene beschreibt. Die Sendeantennen weisen in Elevation unterschiedliche Vertikalkomponenten der Hauptstrahlrichtungen auf. Die Hauptstrahlrichtungen der Sendecharakteristiken weisen also auch unterschiedliche Elevationswinkel zu der Bezugsachse auf, sodass die Sendecharakteristiken also um den jeweiligen Elevationswinkel vertikal bezüglich der Bezugsachse verschwenkt sind.

Dies bedeutet, dass eine erste Sendecharakteristik einer ersten Sendeantenne einen ersten Azimutwinkelbereich und einen ersten Elevationswinkelbereich abdeckt und eine zweite Sendecharakteristik einer zweiten Sendeantenne einen zweiten Azimutwinkelbereich und einen zweiten Elevationswinkelbereich abdeckt. Die Winkelbereiche können sich dabei bereichsweise überlappen. Daraus folgt, dass von den beiden Sendeantennen die Sendesignale in unterschiedliche Teilumgebungsbereiche des Umgebungsbereichs des Kraftfahrzeugs ausgesendet werden.

Darüber hinaus ist es nun vorgesehen, dass auch Empfangsantennen in Elevation unterschiedliche Richtwirkungen aufweisen. Die Empfangscharakteristiken beziehungsweise Richtcharakteristiken der zumindest zwei Empfangsantennen sind entlang unterschiedlicher Elevationswinkel orientiert, decken also unterschiedliche Elevationswinkelbereiche ab. Die Empfangscharakteristiken sind also ebenfalls vertikal bezüglich der Bezugsachse um einen der jeweiligen Empfangscharakteristik zugeordneten Elevationswinkel verschwenkt. Durch das Verschwenken der Empfangscharakteristiken wird somit der vertikale Empfangsbereich beziehungsweise Sichtbereich der Radarsensoreinrichtung, welcher sich durch die Elevationswinkelbereiche beider Empfangscharakteristiken ergibt, aufgeweitet. Dies bedeutet, dass ein vertikaler Öffnungswinkel des Sichtbereiches der Radarsensoreinrichtung vergrößert wird, sodass durch die Empfangsantennen und die den Empfangsantennen zugeordneten Empfangskanäle zuverlässig eine Elevationswinkelmessung mit einer hohen Winkelauflösung durchgeführt werden kann.

Insbesondere ist es dabei vorgesehen, dass Azimutwinkel der jeweiligen Hauptstrahlrichtungen der Empfangscharakteristiken der zumindest zwei Empfangsantennen gleich ausgebildet sind. Dies bedeutet, dass die Empfangsantennen jeweils denselben Azimutwinkelbereich abdecken. Bei einer der Empfangsantennen wird die Empfangscharakteristik jedoch in Elevation modifiziert, sodass die Empfangsantennen unterschiedliche Elevationswinkelbereiche abdecken. Der von den Empfangsantennen abgedeckte Azimutwinkelbereich, welcher einen horizontalen Sichtbereich der Radarsensoreinrichtung darstellt, wird dabei durch einen horizontalen Öffnungswinkel angegeben. Der horizontale Öffnungswinkel kann beispielsweise idealerweise 180° betragen, sodass der an die Radar sensoreinrichtung angrenzende Halbraum abgedeckt wird. Im eingebauten Zustand der Radarsensoreinrichtung am Kraftfahrzeug ist der Azimutwinkelbereich daher quasi omnidirektional ausgebildet. Durch die Modifikation der Richtcharakteristik in Elevation wird in vertikaler Richtung eine bessere Detektierbarkeit von Objekten erreicht werden, während die Detektierbarkeit in horizontaler Richtung insbesondere nicht negativ beeinflusst wird. Dies bedeutet, dass von den Empfangsantennen zusätzlich zur Elevationswinkelmessung die Azimutwinkelmessung zuverlässig und insbesondere ohne Einschränkungen der Sensorperformance mittels digitalem Beamforming durchgeführt werden kann. Die Radarsensoreinrichtung ist somit besonders zuverlässig gestaltet.

Besonders bevorzugt weist eine erste Hauptstrahlrichtung einer ersten Sendecharakteristik einer ersten Sendeantenne und/oder einer ersten Empfangscharakteristik einer ersten Empfangsantenne einen ersten Elevationswinkel von 0° bezüglich einer parallel zu einer Fahrbahn des K raftfahrzeugs orientierten Bezugsachse auf. Eine zweite Hauptstrahlrichtung einer zweiten Sendecharakteristik einer zweiten Sendeantenne und einer zweiten Empfangscharakteristik einer zweiten Empfangsantenne weist einen jeweiligen zweiten, von 0° unterschiedlichen Elevationswinkel auf. Die Bezugsachse erstreckt sich dabei auf der Einbauhöhe der Radarsensoreinrichtung parallel zu der Fahrbahn des Kraftfahrzeugs, sodass sich auch die jeweiligen ersten Hauptstrahlrichtungen der ersten Sendeantenne und der ersten Empfangsantenne parallel zu der Fahrbahn des Kraftfahrzeugs erstrecken. Die jeweiligen zweiten Hauptstrahlrichtungen der zweiten Sendeantenne und der zweiten Empfangsantenne sind schräg zu der Bezugsachse und damit zu der horizontalen Ebene orientiert.

Die zweite Hauptstrahlrichtung der zweiten Sendeantenne und die zweite Hauptstrahlrichtung der zweiten Empfangsantenne können dabei unterschiedliche Elevationswinkel oder den gleichen Elevationswinkel aufweisen. Der zweite Elevationswinkel kann beispielsweise positiv sein, sodass die jeweilige zweite Hauptstrahlrichtung schräg nach unten in Richtung der Fahrbahn orientiert ist. Durch Orientieren der zweiten Sendecharakteristik in Richtung der Fahrbahn kann ein Fahrbahnbereich erfasst beziehungsweise ausgeleuchtet werden, sodass, insbesondere in Kombination mit der in Richtung der Fahrbahn orientierten zweiten Empfangscharakteristik, bodennahe Objekte besser detektiert werden können. Durch die verbesserte Detektierbarkeit dieser Objekte können diese durch Auswertung des Elevationswinkels insbesondere als für das Kraftfahrzeug überfahrbare Objekte, beispielsweise Gullideckel, oder Hindernisse für das Kraftfahrzeug, beispielsweise andere Fahrzeuge, klassifiziert werden. Der zweite Elevationswinkel kann beispielsweise negativ sein, sodass die jeweilige zweite Hauptstrahlrichtung schräg nach oben in Richtung des Himmels orientiert ist. Durch Orientieren der zweiten Sendecharakteristik in Richtung des Himmels kann ein Bereich schräg über dem Kraftfahrzeug erfasst beziehungsweise ausgeleuchtet werden, sodass, insbesondere in Kombination mit der in Richtung des Himmels orientierten zweiten Empfangscharakteristik, Objekte über dem Kraftfahrzeug besser detektiert werden können. Durch die verbesserte Detektierbarkeit dieser Objekte können diese durch Auswertung des Elevationswinkels insbesondere als für das Kraftfahrzeug unterfahrbare Objekte, beispielsweise Schilderbrücken, oder Hindernisse für das Kraftfahrzeug, beispielsweise Lkws, klassifiziert werden. Der zweite Elevationswinkel kann einen betragsmäßigen Wert zwischen 10° und 20° aufweisen.

Insbesondere ist dabei ein vertikaler Öffnungswinkel der zweiten Empfangscharakteristik größer ausgebildet als ein vertikaler Öffnungswinkel der ersten Empfangscharakteristik. Dies bedeutet, dass die Empfangscharakteristik der zweiten Empfangsantenne in Elevation einerseits aufgeweitet und andererseits in ihrer Hauptstrahlrichtung beispielsweise nach unten in Richtung der Fahrbahn verschwenkt ist. Somit wird ein von der zweiten Empfangscharakteristik abgedeckter zweiter Elevationswinkelbereich vergrößert, sodass insbesondere in Kombination mit der nach unten geschwenkten zweiten Sendecharakteristik der zweiten Sendeantenne die Detektierbarkeit von Objekten in Bodennähe deutlich verbessert werden kann.

Bevorzugt ist ein Elevationswinkelunterschied zwischen den Hauptstrahlrichtungen der ersten und der zweiten Empfangscharakteristik und/oder ein vertikaler Öffnungswinkel der zweiten Empfangscharakteristik bezüglich eines vertikalen Öffnungswinkels der ersten Empfangscharakteristik so ausgebildet, dass ein von der zweiten Empfangsantenne empfangenes Empfangssignal höchstens eine Dämpfung von 6dB gegenüber einem von der ersten Empfangsantenne empfangenen Empfangssignal aufweist. Die von der ersten und der zweiten Empfangsantenne empfangenen Empfangssignale stammen dabei insbesondere von der Reflexion desselben Sendesignals. Der Erfindung liegt hierbei die Erkenntnis zugrunde, dass eine Abschwächung einer Amplitude der zweiten Empfangsantenne auf dem zugehörigen Empfangskanal um bis zu 6dB keinen negativen Einfluss auf die Azimutwinkelmessung hat. Dies bedeutet, dass mit der erfindungsgemäßen Radarsensoreinrichtung nach wie vor zuverlässig und genau die Azimutwinkelmessung durchgeführt werden kann, während hingegen eine Elevationswinkelmessung genauer durchgeführt werden kann, nämlich wenn sich für Objekte beziehungsweise Ziele, welche sich insbesondere auf Einbauhöhe der Radarsensoreinrichtung am Kraftfahrzeug befinden, eine Abschwächung beziehungsweise Dämpfung von höchstens 6dB ergibt.

In einer Weiterbildung der Erfindung weist die Antennenkonfiguration eine dritte und eine vierte Empfangsantenne auf, wobei eine dritte und eine vierte Hauptstrahlrichtung von Empfangscharakteristiken der dritten und vierten Empfangsantenne den ersten Elevationswinkel aufweisen und wobei die Azimutwinkel der Hauptstrahlrichtungen aller Empfangscharakteristiken sowie horizontale Öffnungswinkel aller Empfangscharakteristiken gleich ausgebildet sind. Mit anderen Worten bedeutet dies, dass die Antennenkonfiguration vier Empfangsantennen aufweist, welche simultan reflektierte Sendesignale aus dem Umgebungsbereich empfangen können. Im Azimut beziehungsweise in der Horizontale decken alle Empfangscharakteristiken insbesondere den gleichen Azimutwinkelbereich ab. Die Hauptstrahlrichtungen aller Empfangscharakteristiken sind dabei insbesondere entlang einer Blickrichtung der Radarsensoreinrichtung im eingebauten Zustand am Kraftfahrzeug orientiert, wobei die Blickrichtung auf die Bezugsachse für den Azimutwinkel bezogen ist. Bei einem heckseitig verbauten Radarsensor, dessen Blickrichtung entgegen der Fahrtrichtung geradeaus nach hinten orientiert ist, ist die Blickrichtung entlang der Fahrzeuglängsachse orientiert, welche die Bezugsachse darstellt. Der Azimutwinkel beträgt in diesem Fall 0°. Bei einem Radarsensor mit einer schräg zur Seite gerichteten Blickrichtung, welche in horizontaler Richtung von der Bezugsachse abweicht, ist der Azimutwinkel von 0° verschieden. Die horizontalen Öffnungswinkel aller Empfangscharakteristiken betragen dabei beispielsweise idealerweise 180°, sodass alle Empfangscharakteristiken in der Horizontalen den an die Radarsensoreinrichtung angrenzenden Halbraum abdecken.

Dadurch kann eine zuverlässige Azimutwinkelmessung über digitales Beamforming gewährleistet werden.

In Elevation decken drei der vier Empfangsantennen, also die erste, die dritte und die vierte Empfangsantenne, den gleichen Elevationswinkelbereich ab, welcher insbesondere entlang der parallel zu der Fahrbahn orientierten Bezugsachse für den Elevationswinkel orientiert ist. Die zweite Sendeantenne deckt einen vertikal schräg zu der Bezugsachse und damit einen schräg zu den Hauptstrahlrichtungen der anderen Empfangsantennen orientierten Elevationswinkelbereich ab. Bei einer schräg nach unten orientierten zweiten Empfangscharakteristik können Objekte, welche sich nicht auf Einbauhöhe der Radarsensoreinrichtung, insbesondere unterhalb der Einbauhöhe der Radarsensoreinrichtung befinden, besonders gut detektiert und klassifiziert werden.

Vorzugsweise weist die Antennenkonfiguration eine dritte Sendeantenne auf, wobei eine dritte Hauptstrahlrichtung einer dritten Sendecharakteristik der dritten Sendeantenne den ersten Elevationswinkel aufweist, wobei ein Azimutwinkel der zweiten Hauptstrahlrichtung der zweiten Sendeantenne zwischen den Azimutwinkeln der ersten und der dritten Hauptstrahlrichtung liegend ausgebildet ist und wobei ein horizontaler Öffnungswinkel der zweiten Sendecharakteristik größer ist als ein jeweiliger horizontaler Öffnungswinkel der ersten Sendecharakteristik und der dritten Sendecharakteristik. Dies bedeutet beispielsweise, dass der Azimutwinkel der zweiten Sendeantenne 0°zur in der Blickrichtung orientieren Bezugsachse aufweist und sich die zweite Hauptstrahlrichtung der zweiten Sendeantenne in der horizontalen Ebene entlang der Bezugsachse, beispielsweise der Fahrzeuglängsachse, erstreckt. Die jeweiligen Azimutwinkel der ersten und dritten Sendecharakteristik sind betragsmäßig insbesondere gleich ausgebildet, wobei die erste Sendecharakteristik beispielsweise in horizontaler Richtung zur einen Seite verschwenkt und die Sendecharakteristik der dritten Sendeantenne in horizontaler Richtung zur anderen Seite verschwenkt ist. Die erste und die dritte Sendecharakteristik sind also zu einer jeweiligen Seite hin verschwenkt und dabei fokussiert. Die erste und die dritte Sendeantenne sind also sektorisierende Sendeantennen, wobei deren Hauptstrahlrichtungen in Elevation in der Horizontalen liegen. Die horizontalen Öffnungswinkel der ersten und der dritten Empfangscharakteristik decken dabei insgesamt einen horizontalen Bereich von in etwa 180°ab. Der horizontale Öffnungswinkel der zweiten Sendecharakteristik beträgt dabei idealerweise 180°, sodass die zweite Sendecharakteristik den Halbraum ausleuchtet. Die Richtcharakteristik der zweiten Sendeantenne ist im Azimut also quasi omnidirektional, und in Elevation beispielsweise in Richtung des Bodens geneigt ist.

Vorzugsweise ist die zweite Hauptstrahlrichtung der zweiten Sendecharakteristik in Richtung einer Fahrbahn des Kraftfahrzeugs schräg nach unten hin orientiert. Eine Steuereinrichtung der Radarsensoreinrichtung ist dazu ausgelegt, eine Blockierung der Radarsensoreinrichtung anhand einer Ausdehnung und/oder Kontinuität einer Detektionspunkteverteilung in einem von der zweiten Sendeantenne ausgesendeten, an der Fahrbahn reflektierten und von zumindest einer der Empfangsantennen als Empfangssignal empfangenen Sendesignals zu erkennen. Gemäß dieser Ausführungsform ist die Radarsensoreinrichtung also dazu ausgelegt, einen blockierten Zustand der Radarsensoreinrichtung zu erkennen, durch welche eine Funktiontüchtigkeit der Radarsensoreinrichtung negativ beeinflusst sein kann. In einem solchen blockierten Zustand ist die Radarsensoreinrichtung beispielsweise von einem Verschmutzungsbelag, zum Beispiel einer Eisschicht, einer Schneeschicht oder einer Schmutzschicht, bedeckt und wird somit beim Aussenden und/oder Empfangen der Radarsignale behindert. Zur Blockierungserkennung wird von der zweiten Sendeantenne, deren Sendecharakteristik schräg nach unten in Richtung der Fahrbahn beziehungsweise des Erdbodens geneigt ist, die Fahrbahn bereichsweise ausgeleuchtet. Das an der Fahrbahn reflektierte Sendesignal wird von zumindest einer der Empfangsantennen, insbesondere von der zweiten Empfangsantenne, deren Empfangscharakteristik ebenfalls in Richtung des Bodens gerichtet ist, als Empfangssignal wieder erfasst. Zur Auswertung der Blockierungserkennung wird die Detektionspunkteverteilung beziehungsweise Punktewolke anhand des Empfangssignals bestimmt. Die Detektionspunkteverteilung umfasst Reflektionspunkte, welche von der Reflexion des Sendesignals der zweiten Sendeantenne am Boden stammen.

Zur Bestimmung der Detektionspunkteverteilung werden Werte der Detektionspunkte beziehungsweise Reflexionspunkte über einen Abstand beziehungsweise einer Entfernung zum Kraftfahrzeug aufgetragen. Die Entfernung kann beispielsweise aus einer Laufzeit des Radarsignals gewonnen werden. Ob es sich bei den Detektionspunkten tatsächlich um Bodenreflexionen handelt, kann dabei anhand der Empfangssignale der drei anderen Empfangsantennen plausibilisiert beziehungsweise überprüft werden. Als die Werte der Detektionspunkte wird dabei insbesondere ein Verhältnis zwischen einer gemessenen Radialgeschwindigkeit des Bodens, welcher ein stationäres Objekt darstellt, und einer Geschwindigkeit des Kraftfahrzeugs ermittelt. Diese Punktwolke kann nun ausgewertet werden, indem eine zu der Azimutrichtung korrespondierende Ausdehnung der Punktewolke bestimmt wird.

Der Erfindung liegt hierbei die Erkenntnis zugrunde, dass die maximale Ausdehnung der Punktewolke für die Azimutrichtung durch den horizontalen Sichtbereich der Radarsensoreinrichtung begrenzt ist. Wenn der Sensor nicht blockiert ist, so müssten über den gesamten horizontalen Sichtbereich kontinuierlich Detektionspunkte erfasst werden können. Falls die zu der Azimutrichtung korrespondierende Ausdehnung der Punktewolke nicht dem horizontalen Sichtbereich der Radarsensoreinrichtung entspricht und/oder nicht kontinuierlich über den gesamten horizontalen Sichtbereich Detektionspunkte kontinuierlich vorhanden sind, wird die Blockierung des Radarsensors erkannt. Insbesondere kann anhand der Kontinuität und/oder der Ausdehnung der Detektionspunkteverteilung ein Grad der Blockierung beziehungsweise ein blockierter Winkelbereich ermittelt werden. Wenn beispielsweise innerhalb der Punktewolke in einem bestimmten Bereich keine Detektionspunkte vorhanden sind, so kann davon ausgegangen werden, dass der Radarsensor für den zugehörigen Azimutwinkelbereich blind ist. Wenn beispielsweise innerhalb der Punktewolke in einem bestimmten Bereich nur wenige Detektionspunkte vorhanden sind, so kann davon ausgegangen werden, dass die Sicht des Radarsensors in dem zugehörigen Azimutwinkelbereich eingeschränkt ist.

Wenn die vollständige oder teilweise Blockierung der Radarsensoreinrichtung erkannt wurde, kann ein Warnsignal an einen Fahrer des Kraftfahrzeugs ausgegeben werden, sodass dieser über die eingeschränkte Funktionstüchtigkeit der Radarsensoreinrichtung informiert wird.

Es erweist sich als besonders vorteilhaft, wenn die entlang der zweiten Hauptstrahlrichtung orientierte zweite Sendecharakteristik der zweiten Sendeantenne eine Nullstelle bei einem vorbestimmten Nullwertswinkel aufweist. Der Nullwertswinkel ist dabei insbesondere ein vorbestimmter Elevationswinkel zwischen einer Nullwertsrichtung und der Hauptstrahlrichtung der zweiten Sendeantenne. Die Nullstelle ist also entlang der Nullwertsrichtung orientiert. Als Nullstelle werden dabei alle Punkte in dem Antennendiagramm bezeichnet, an welchen die Strahlungsenergie praktisch null ist. Entlang der durch den Nullwertswinkel vorgegebenen Nullwertsrichtung strahlt die zweite Sendeantenne also praktisch keine Strahlungsenergie ab. Dies bedeutet, dass an einem Objekt, welches sich in der Nullstelle der zweiten Sendecharakteristik befindet, im Wesentlichen kein Sendesignal reflektiert wird und somit im Wesentlichen kein Empfangssignal empfangen wird. Die Nullstelle kann beispielsweise erzeugt werden, indem mehrere Sendeantennenelemente der zweiten Sendeantenne mit unterschiedlichen Phasen angesteuert werden.

Eine Steuereinrichtung der Radarsensoreinrichtung ist nun dazu ausgelegt, einen Elevationswinkel des Objektes bei Eintreten des Objekts in die Nullstelle anhand des von zumindest einer der Empfangsantennen empfangenen Empfangssignals und des Nullwertswinkels zu bestimmen. Dies bedeutet, dass die Elevation des Objektes bestimmt wird, sobald das Objekt die Nullstelle betritt. Das Objekt betritt die Nullstelle, indem sich das Kraftfahrzeug mit der Radarsensoreinrichtung beispielsweise auf das Objekt zubewegt und das Objekt dabei in einem bestimmten Abstand beziehungsweise einer bestimmten Entfernung zum Kraftfahrzeug, welche abhängig ist von der Elevation des Objektes, aus der Richtcharakteristik der zweiten Sendeantenne in die Nullstelle übergeht. Anders ausgedrückt ist ein Zeitpunkt des Eintretens des Objekts in die Nullstelle abhängig von der Entfernung beziehungsweise dem Abstand des Objekts zum Kraftfahrzeug und des Elevationswinkels beziehungsweise der Elevation des Objekts. Das Übergehen des Objekts kann anhand eines Einbruchs der Signalamplitude im Empfangssignal bestimmt werden. Die Elevation des Objekts wird dabei insbesondere durch einen Amplitudenvergleich des reflektierten Sendesignals der zweiten Sendeantenne sowie des reflektierten Sendesignals der ersten und/oder dritten Sendeantenne, welches keine Nullstelle aufweist, detektiert.

Anhand der Nullstelle können Elevationswinkel der Objekte besonders präzise erfasst werden und anhand der erfassten Elevationswinkel die Objekte klassifiziert werden. Wenn die zweite Sendecharakteristik beispielsweise in Richtung der Fahrbahn orientiert ist, so können insbesondere fahrbahnnahe Objekte erkannt werden und anhand des Elevationswinkels des Objektes, also anhand der Höhe des Objektes über der Fahrbahn, unterschieden werden, ob die Objekte für das Kraftfahrzeug überfahrbar sind oder nicht. Das Objekt wird dann als für das Kraftfahrzeug überfahrbar bewertet, falls der Elevationswinkel des Objekts einen vorbestimmten Schwellwert unterschreitet. Der Schwellwert ist dabei beispielsweise so gewählt, dass ein Elevationswert eines von der Radarsensoreinrichtung erfassten bodennahen und mit der Fahrbahn verbundenen Objektes, beispielsweise ein Gullideckel, den Schwellwert unterschreitet, während ein Elevationswert eines beabstandet zu der Fahrbahn angeordneten Objektes, beispielsweise ein Karosserieteil eines anderen Kraftfahrzeugs, den Schwellwert überschreitet. Wenn die Nullstelle beispielsweise in Richtung des Himmels, also schräg nach oben hin, orientiert ist, können unterfahrbare Objekte, beispielsweise Schilderbrücken, erkannt und als unterfahrbare Objekte klassifiziert werden.

Besonders bevorzugt sind die zweite Hauptstrahlrichtung und die Nullstelle der zweiten Sendecharakteristik der zweiten Sendeantenne in Richtung einer Fahrbahn des Kraftfahrzeugs schräg nach unten hin orientiert, wobei eine Steuereinrichtung der Radarsensoreinrichtung dazu ausgelegt ist, eine Fehljustage der Radarsensoreinrichtung anhand eines, von der zweiten Sendeantenne ausgesendeten, an der Fahrbahn reflektierten und von zumindest einer der Empfangsantennen als Empfangssignal empfangenen Sendesignals zu erkennen, falls eine Abweichung zwischen einem anhand des Empfangssignals detektierten Abstandswert der Nullstelle vom Kraftfahrzeug und einem vorbestimmten Referenzwert einen vorbestimmten Schwellwert überschreitet. Der vorbestimmte Referenzwert entspricht einem Abstandswert, in welchem die Nullstelle bei einem korrekt eingebauten, nicht fehljustierten Radarsensor auf der Fahrbahn auftrifft. Dieser Referenzwert kann beispielsweise zur Überprüfung der vertikalen Justage, also zur Überprüfung einer Blickrichtung der Radarsensoreinrichtung in Elevation, in einer Speichereinrichtung hinterlegt sein. Wenn nun, beispielsweise im Zusammenhang mit der Blockierungsmessung, die Detektionspunkteverteilung erfasst wird, so kann anhand der Detektionspunkteverteilung die vertikale Justage überprüft werden. Dazu wird überprüft, bei welcher Entfernung in der Detektionspunkteverteilung keine Detektionspunkte vorhanden sind, also in welcher Entfernung ein Signaleinbruch in der Detektionspunkteverteilung auftritt. Dieser Bereich in Detektionspunkteverteilung, bei welcher keine Detektionspunkte auftreten, resultiert aus der Nullstelle der zweiten Sendecharakteristik. Wenn diese Entfernung dieses Bereiches mit dem vorbestimmten Referenzwert übereinstimmt beziehungsweise innerhalb eines Toleranzbereiches liegt, so wird davon ausgegangen, dass der Radarsensor korrekt justiert ist. Wenn die Entfernungswerte voneinander abweichen, so wird die Fehljustage der Radarsensoreinrichtung erkannt und beispielsweise ein Warnsignal an den Fahrer des Kraftfahrzeugs ausgegeben.

Die Erfindung betrifft ebenfalls ein Fahrerassistenzsystem für ein Kraftfahrzeug mit einer erfindungsgemäßen Radarsensoreinrichtung. Das Fahrerassistenzsystem kann basierend auf den von der Radarsensoreinrichtung erfassten Azimutwinkel und Elevationswinkel von Objekten in dem Umgebungsbereich des Kraftfahrzeugs Assistenzfunktionen ausführen. Das Fahrerassistenzsystem ist insbesondere als ein automatischer Notbremsassistent ausgebildet. Basierend auf der von der Radarsensoreinrichtung Elevationswinkel der Objekte sowie der Klassifikation der Objekte kann bewertet werden, ob das Fahrerassistenzsystem eine Notbremsung durchführen muss oder nicht. Wenn beispielsweise Objekte als überfahrbar oder unterfahrbar klassifiziert wurden, so kann eine automatische Notbremsung des Kraftfahrzeugs unterbleiben. Wenn Objekte als nicht überfahrbar beziehungsweise nicht unterfahrbar, also als Hindernisse für das Kraftfahrzeug klassifiziert wurden, so kann das Fahrerassistenzsystem die automatische Notbremsung des Kraftfahrzeugs auslösen. Das Fahrerassistenzsystem ist dabei besonders zuverlässig gestaltet, da die Radarsensoreinrichtung dazu ausgelegt ist, einen blockierten Zustand und/oder eine Fehljustage zu erkennen. Das Fahrerassistenzsystem kann außerdem eine Ausgabeeinrichtung aufweisen, mittels welcher Warnsignale an den Fahrer bei Vorliegen des blockierten Zustands und/oder der Fehljustage ausgegeben werden können.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die Erfindung betrifft außerdem ein Verfahren zum Erfassen eines Objektes in einem Umgebungsbereich des Kraftfahrzeugs, bei welchem von zumindest zwei Sendeantennen Sendesignale ausgesendet werden, wobei jeweilige Hauptstrahlrichtungen von Sendecharakteristiken der zumindest zwei Sendeantennen unterschiedliche Elevationswinkel und unterschiedliche Azimutwinkel aufweisen. Darüber hinaus werden von zumindest zwei, zu den Sendeantennen separaten Empfangsantennen die in dem Umgebungsbereich reflektierten Sendesignale als Empfangssignale empfangen, wobei jeweilige Hauptstrahlrichtungen von Empfangscharakteristiken der zumindest zwei Empfangsantennen unterschiedliche Elevationswinkel aufweisen.

Die mit Bezug auf die erfindungsgemäße Radarsensoreinrichtung vorgestellten und bevorzugten Ausführungsformen und deren Vorteile gelten entsprechend für das erfindungsgemäße Fahrerassistenzsystem, für das erfindungsgemäße Kraftfahrzeug sowie für das erfindungsgemäße Verfahren.

Mit Angaben "vor", "hinter", "über", "unter", "vertikal", "horizontal", "schräg", "Azimut", "Elevation", etc. sind bei bestimmungsgemäßem Gebrauch und bei bestimmungsgemäßem Anordnen der Radarsensoreinrichtung am Kraftfahrzeug und bei einem dann vor dem Kraftfahrzeug stehenden und entlang einer Fahrzeuglängsachse (L) des Kraftfahrzeugs blickenden Beobachter gegebene Position und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separate Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:

Fig. 1       eine schematische Darstellung einer Ausführungsform eines erfindungsgemäßen Kraftfahrzeugs;

Fig. 2       eine schematische Darstellung einer Ausführungsform einer Antennenkonfiguration für eine Radarsensoreinrichtung;

Fig. 3a, b   Antennendiagramme von Sendeantennen der Antennenkonfiguration aus Fig. 2;

Fig. 4       ein Antennendiagramm der Empfangsantennen der Antennenkonfiguration aus Fig. 2;

Fig. 5       eine schematische Darstellung einer Ausführungsform eines erfindungsgemäßen Kraftfahrzeugs in einer Seitenansicht;

Fig. 6       eine schematische Darstellung einer Ausführungsform eines Kraftfahrzeugs beim Detektieren eines Azimutwinkels eines stationären Objektes; und

Fig. 7       eine schematische Darstellung einer Detektionspunkteverteilung, welche zur Bestimmung einer Fehljustage und/oder einer Blockierung der Radarsensoreinrichtung verwendet wird.

In den Figuren sind gleiche sowie funktionsgleiche Elemente mit den gleichen Bezugszeichen versehen.

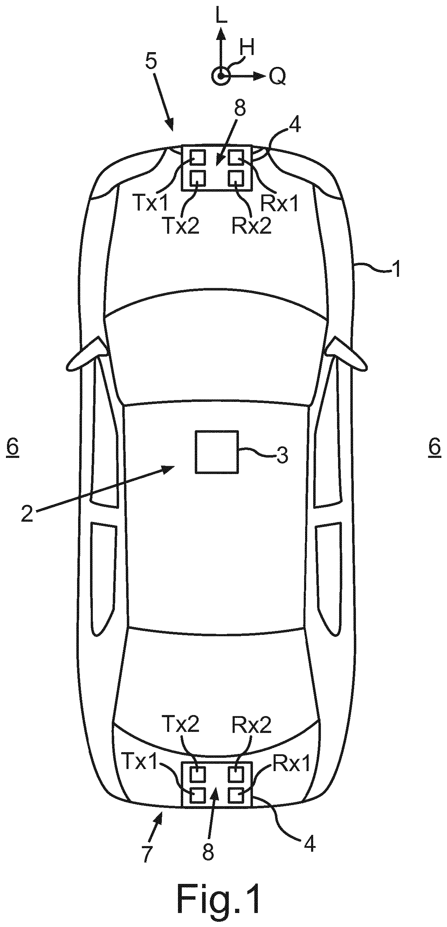

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches beispielsweise als ein automatisches Notbremsassistenzsystem und/oder ein automatischer Abstandstempomat ausgebildet sein kann. Das Fahrerassistenzsystem 2 weist eine Steuereinrichtung 3 auf, welche dazu ausgelegt ist, mit Radarsensoreinrichtungen 4 des Fahrerassistenzsystems 2 zu kommunizieren. Die Steuereinrichtung 3 ist hier durch ein fahrzeugseitiges Steuergerät ausgebildet, die Steuereinrichtung 3 kann jedoch auch in die Radarsensoreinrichtungen 4 integriert sein. Im vorliegenden Fall weist das Kraftfahrzeug 1 zwei Radarsensoreinrichtungen 4 auf, wobei eine erste Radarsensoreinrichtung 4 in einem Frontbereich 5 des Kraftfahrzeugs 1 angeordnet ist und einen Umgebungsbereich 6 des Kraftfahrzeugs 1 vor dem Kraftfahrzeug 1 überwachen kann und wobei eine zweite Radarsensoreinrichtung 4 in einem Heckbereich 7 des Kraftfahrzeugs 1 angeordnet ist und den Umgebungsbereich 6 hinter dem Kraftfahrzeug 1 überwachen kann.

Die Radarsensoreinrichtungen 4 sind dazu ausgebildet, Objekte in dem Umgebungsbereich 6 des Kraftfahrzeugs 1 zu erfassen. Dazu weist jede Radarsensoreinrichtung 4 jeweils eine Antennenkonfiguration 8 auf, welche zumindest zwei Sendeantennen Tx1, Tx2 zum Aussenden von Sendesignalen sowie zumindest zwei Empfangsantennen Rx1, Rx2 zum Empfangen der in dem Umgebungsbereich 6 reflektieren Empfangssignale aufweist. Aus den Empfangssignalen können Informationen über die Objekte extrahiert werden, beispielsweise eine Relativgeschwindigkeit sowie eine Position der Objekte. Insbesondere kann von der Radarsensoreinrichtung 4 eine Azimutwinkelmessung zur Messung eines Azimutwinkels $\Psi$ des Objektes sowie eine Elevationswinkelmessung zur Messung eines Elevationswinkels $\Omega$ des Objektes durchgeführt werden. Der Azimutwinkel $\Psi$ ist dabei ein horizontaler Winkel in einer von einer Fahrzeuglängsachse L und einer Fahrzeugquerachse Q aufgespannten Ebene bezüglich einer Bezugsachse, beispielsweise bezüglich der Fahrzeuglängsachse L. Der Elevationswinkel $\Omega$ ist ein vertikaler Winkel in einer von der Fahrzeuglängsachse L und einer (senkrecht auf der Zeichenebene stehenden) Fahrzeughochachse H aufgespannten Ebene bezüglich einer Bezugsachse, beispielsweise wiederum bezüglich der Fahrzeuglängsachse L. Der Elevationswinkel $\Omega$ kennzeichnet eine Höhe des Objektes über dem Erdboden beziehungsweise einer Fahrbahn 16 des Kraftfahrzeugs 1.

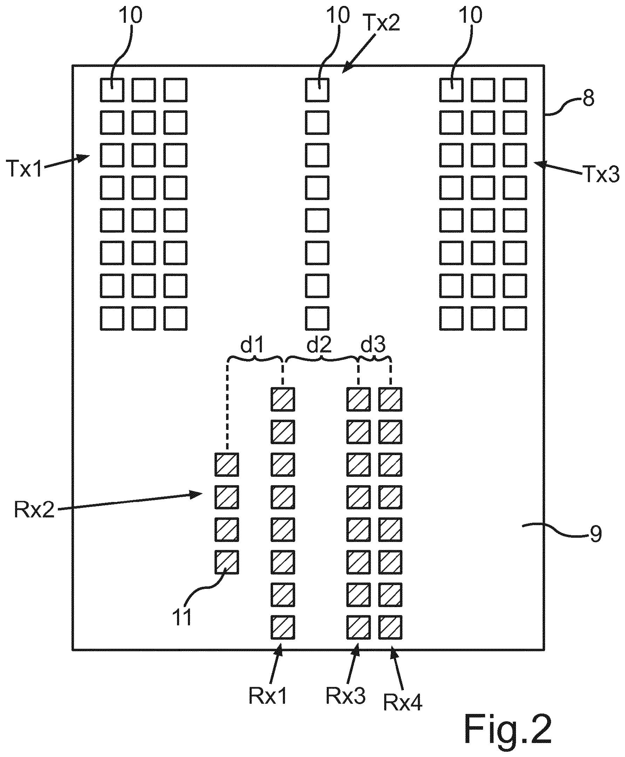

In Fig. 2 ist eine Ausführungsform der Antennenkonfiguration 8 der Radarsensoreinrichtung 4 dargestellt. Dabei sind auf einem Antennenboard 9 im vorliegenden Fall drei Sendeantennen Tx1, Tx2, Tx3 sowie vier Empfangsantennen Rx1, Rx2, Rx3, Rx4 angeordnet, wobei eine geometrische Anordnung der Sendeantennen Tx1 bis Tx3 sowie der Empfangsantennen Rx1 bis Rx4 lediglich beispielhaft gezeigt ist. Die Sendeantennen Tx1, Tx2 werden dabei insbesondere zum sequentiellen Aussenden der Sendesignale beziehungsweise Radarsignale in Form von elektromagnetischen Wellen, beispielsweise von der Steuereinrichtung 9, angesteuert. Dies bedeutet, dass die Sendeantennen Tx1, Tx2 nacheinander Sendesignale aussenden. Die Empfangsantennen Rx1, Rx2 werden zum simultanen Empfangen der Empfangssignale angesteuert. Dies bedeutet, dass die Empfangsantennen Rx1, Rx2 gleichzeitig die reflektierten Sendesignale empfangen. Die Azimutwinkelmessung wird von den Empfangsantennen Rx1, Rx2 mittels digitalem Beamforming durchgeführt.

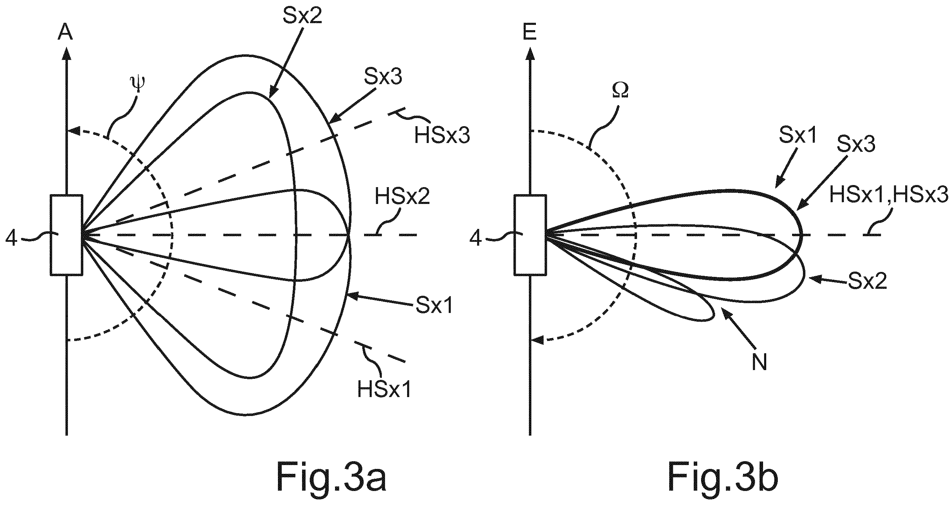

Dabei weisen eine erste Sendeantenne Tx1, eine zweite Sendeantenne Tx2 und eine dritte Sendeantenne Tx3 sowohl in Azimut A (siehe Fig. 3a) als auch in Elevation E (siehe Fig. 3b) unterschiedlich geformte Richtcharakteristiken beziehungsweise Sendecharakteristiken Sx1, Sx2, Sx3 auf. Die erste und die dritte Sendeantenne Tx1, Tx3 sind sektorisierende Sendeantennen, deren Sendecharakteristiken Sx1, Sx3, wie anhand eines horizontalen Antennendiagramms in Fig. 3a gezeigt, jeweils eingeschränkte, seitlich ausgerichtete Azimutwinkelbereiche ausleuchten beziehungsweise abdecken, während die Sendecharakteristik Sx2 der zweiten Sendeantenne Tx2 insbesondere den gesamten Halbraum ausleuchtet. Die zweite Sendecharakteristik Sx2 kann also als omnidirektional bezeichnet werden. Dabei weist eine zweite Hauptstrahlrichtung HSx2, entlang welcher die zweite Sendecharakteristik Sx2 der zweiten Sendeantenne Tx2 orientiert ist, einen Azimutwinkel $\Psi$ von 0° zu einer Bezugsachse auf, welche beispielsweise entlang der Fahrzeuglängsachse L orientiert ist. Bezogen auf die zweite Hauptstrahlrichtung HSx2, ist eine erste Hauptstrahlrichtung HSx1 der ersten Sendecharakteristik Sx1 der ersten Sendeantenne Tx1 um einen negativen Azimutwinkel $\Psi$ verkippt. Somit ist die erste Sendecharakteristik Sx1 bei einer heckseitig am Kraftfahrzeug 1 angeordneten Radarsensoreinrichtung 4 in Richtung einer Fahrerseite des Kraftfahrzeugs 1 verschwenkt. Bezogen auf die zweite Hauptstrahlrichtung HSx2, ist eine dritte Hauptstrahlrichtung HSx3 der dritten Sendecharakteristik Sx3 der dritten Sendeantenne Tx3 um einen positiven Azimutwinkel $\Psi$ verkippt, wodurch die dritte Sendecharakteristik Sx3 in Richtung einer Beifahrerseite des Kraftfahrzeugs 1 verschwenkt ist.

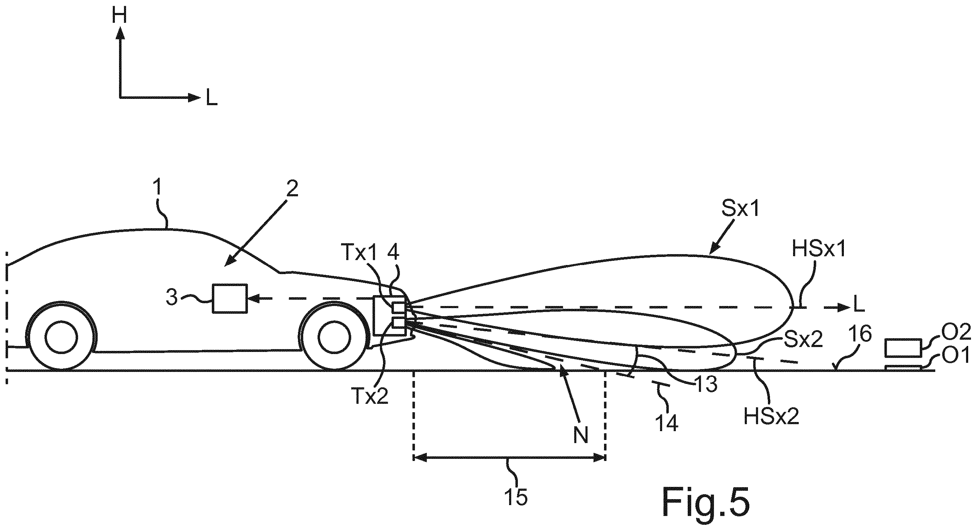

Wie anhand des vertikalen Antennendiagramms gemäß Fig. 3b gezeigt, liegen die erste und die dritte Hauptstrahlrichtung HSx1, HSx3 in Elevation E in der Horizontalen. Dies bedeutet, dass die Hauptstrahlrichtungen HSx1, HSx3 einen Elevationswinkel $\Omega$ von 0° zu einer Bezugsachse, beispielsweise der Fahrzeuglängsachse L, aufweisen. In Elevation E besitzen die erste und die dritte Sendeantenne Tx1, Tx3 also die gleiche, in der Horizontalen fokussierte und parallel zu der Fahrbahn 16 beziehungsweise dem Erdboden ausgerichtete Richtcharakteristik Sx1, Sx3. Die zweite Sendeantenne Tx2 besitzt jedoch eine nach unten geneigte Richtcharakteristik Sx2, welche hier außerdem eine Nullstelle N aufweist. Im eingebauten Zustand der Radarsensoreinrichtung 4 am Kraftfahrzeug 1 trifft diese Nullstelle N in einem vorbestimmten Abstand 15 auf der Fahrbahn 16 auf (siehe Fig. 5). Die zweite Richtcharakteristik Sx2 muss jedoch keine Nullstelle N aufweisen. Mittels der zweiten Sendeantenne Sx2 wird die Fahrbahn 16 mit einem definierten Signalprofil ausgeleuchtet, durch welche, wie später im Zusammenhang mit den Fig. 5 bis Fig. 7 erläutert, eine Blockierung sowie eine vertikale Dejustage der am Kraftfahrzeug 1 angeordneten Radarsensoreinrichtung 4 erkannt werden können.

Die Sendeantennen Tx1, Tx2, Tx3 weisen dabei, wie in Fig. 2 gezeigt, eine Vielzahl an Sendeelementen 10 auf. Die in Fig. 3a und 3b gezeigten Richtcharakteristiken Sx1, Sx2, Sx3 werden dabei durch eine geeignete Phasenbelegung der Sendeelemente 10 erzeugt beziehungsweise realisiert. Zur Erzeugung der verschwenkten ersten und dritten Sendecharakteristiken Sx1, Sx3 können die in mehreren Spalten angeordneten Sendeelemente 10 gleichphasig angesteuert werden, sodass sich durch eine Überlagerung der von den Sendeelementen 10 ausgesendeten Wellen die Richtwirkung beziehungsweise Bündelung in Azimut A ergibt.

Die vier Empfangsantennen Rx1, Rx2, Rx3, Rx4 weisen im Azimut insbesondere die gleichen Empfangscharakteristiken Dx1, Dx2, Dx3, Dx4 auf, welche nicht separat dargestellt sind, welche jedoch insbesondere im Azimut A der zweiten Sendecharakteristik Sx2 (siehe Fig. 3a) entsprechen. Anders ausgedrückt decken alle Empfangscharakteristiken Dx1, Dx2, Dx3, Dx4 den gleichen Azimutwinkelbereich ab, welcher dem Azimutwinkelbereich der zweiten Sendecharakteristik Sx2 entspricht. Der von den Empfangscharakteristiken Dx1, Dx2, Dx3, Dx4 abgedeckte Azimutwinkelbereich entspricht dabei einem horizontalen Sichtbereich der Radarsensoreinrichtung 4, welcher insbesondere den an das Kraftfahrzeug 1 angrenzenden Halbraum abdeckt und somit eine zuverlässige Azimutwinkelmessung mittels digitalem Beamforming ermöglicht. Hauptstrahlrichtungen HDx1, HDx2, HDx3, HDx4 der Empfangscharakteristiken Dx1, Dx2, Dx3, Dx4 sind somit im Azimut A entlang der gleichen Richtung orientiert und weisen beispielsweise einen Azimutwinkel $\Omega$ von 0° zu der Bezugsachse auf.

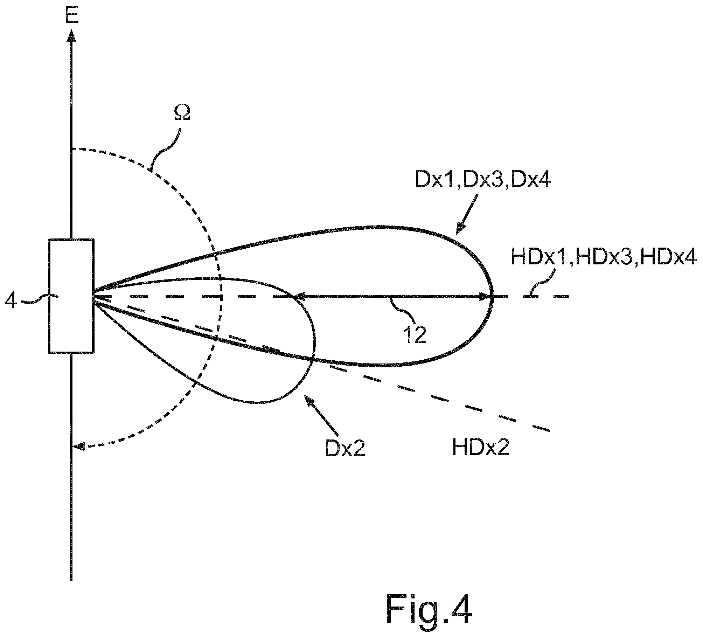

In Elevation E (siehe Fig. 4) liegen die drei Hauptstrahlrichtungen HDx1, HDx3, HDx4 einer ersten, dritten und vierten Empfangsantenne Rx1, Rx3, Rx4 in der Horizontalen, während eine Hauptstrahlrichtung HDx2 einer zweiten Empfangsantenne Rx2 in Richtung des Bodens 16 orientiert ist. Außerdem ist die Empfangscharakteristik Dx2 der zweiten Empfangsantenne Rx2 in Elevation E aufgeweitet. Dadurch wird in vertikaler Richtung eine bessere Detektierbarkeit von Objekten ermöglicht, welche sich in der Nähe der Radarsensoreinrichtung 4 am Boden 16 befinden. In Kombination mit der nach unten geschwenkten Sendecharakteristik Sx2 kann diese Empfangsantenne Rx2 genutzt werden, um Funktionen wie die Blockierungserkennung und die Dejustageerkennung zu realisieren, ohne dass dafür separate Empfangsantennen bereitgestellt werden müssen. Durch den von den Empfangscharakteristiken Dx1, Dx2, Dx3, Dx4 abgedeckten Elevationswinkelbereich ergibt sich ein vertikaler Sichtbereich der Radarsensoreinrichtung 4.

Bisher wurde in der Regel bei den Empfangsantennen Rx1 bis Rx4 in Elevation der gleiche Elevationswinkelbereich abgedeckt, um auf allen vier, den Empfangsantennen Rx1 bis Rx4 zugeordneten Empfangskanälen einen vergleichbar hohen Signalpegel zu erhalten, da andernfalls Mehrdeutigkeiten beim digitalen Beamforming im Azimut A entstehen können. Hier wird nun aber von dieser Vorgehensweise abgewichen, da gezeigt werden konnte, dass sich eine Amplitudenveränderung auf einem Empfangskanal, welcher der in Fig. 2 gezeigten zweiten Empfangsantenne Rx2 zugeordnet ist, am wenigsten negativ auf die Leistungsfähigkeit der Azimutwinkelmessung in Bezug auf mögliche Mehrdeutigkeiten auswirkt. Weiterhin konnte gezeigt werden, dass eine Abschwächung 12 der Amplitude auf diesem Empfangskanal um bis zu 6dB keinen negativen Einfluss hat. Diese Kenntnis wird genutzt, um die zweite Empfangscharakteristik Dx2 der zweiten Empfangsantenne Rx2 in Elevation E zu modifizieren. Die Richtcharakteristik Dx2 wird in der Elevation E aufgeweitet und gleichzeitig deren Hauptstrahlrichtung HDx2 in Richtung des Erdbodens 16 geneigt, sodass sich für Objekte beziehungsweise Ziele auf Einbauhöhe der Radarsensoreinrichtung 4 am Kraftfahrzeug 1 eine Abschwächung 12 von höchstens 6dB ergibt.

Die Modifikation der Empfangscharakteristik Dx2 der zweiten Empfangsantenne Rx2 kann beispielsweise durch eine lineare Phasenbelegung von einzelnen Empfangselementen 11 (siehe Fig. 2) der zweiten Empfangsantenne Rx2 in Kombination mit einer Reduktion einer Gesamtzahl der Empfangselemente 11 dieser zweiten Empfangsantenne Rx2 erreicht werden. Dabei gilt für die Empfangsantennen Rx1, Rx2, Rx3, Rx4 insbesondere eine Anordnung, bei welcher sich die Phasenzentren der vier Empfangsantennen Rx1, Rx2, Rx3, Rx4 in der in Fig. 2 gezeigten vertikalen Richtung alle auf derselben Höhe befinden. In der in Fig. 2 gezeigten horizontalen Richtung gelten dabei bestimmte Abstände $d1$, $d2$, $d3$ in Abhängigkeit von einer Wellenlänge $\lambda$ des Sendesignals: $d1 = \lambda$, wobei $d1$ dem Abstand zwischen der ersten und der zweiten Empfangsantenne Rx1, Rx2 entspricht, $d2 = 1{,}5\lambda$, wobei $d2$ dem Abstand zwischen der ersten und der dritten Empfangsantenne Rx1, Rx3 entspricht, und $d3 = 0{,}5\lambda$, wobei $d3$ dem Abstand zwischen der dritten und der vierten Empfangsantenne Rx3, Rx4 entspricht. Eine lineare Skalierung der Werte sowie eine horizontale Invertierung der Anordnung der Empfangsantennen Rx1, Rx2, Rx3, Rx4 ist ebenfalls möglich.

Für Ziele auf Sensorhöhe ergibt sich durch die Modifikation der zweiten Empfangscharakteristik Dx2 insbesondere keine Veränderung in der Sensorperformance. Gleichzeitig wird es jedoch möglich, den auf dem Boden 16 ausgeleuchteten Bereich, insbesondere für kurze Distanzen, zu erhöhen sowie die Empfindlichkeit für Objekte am Boden 16 zu verbessern. Durch einen Vergleich der von dem Empfangskanal gemessenen Leistung, welcher der in Fig. 2 gezeigten zweiten Empfangsantenne Rx2 zugeordnet ist, mit den von den anderen Empfangskanälen gemessenen Leistungen kann zusätzlich eine Höhenschätzung des Objektes durchgeführt werden.

Die Höhenschätzung beziehungsweise Elevationsmessung des Objektes kann insbesondere mit der die Nullstelle N aufweisenden Sendecharakteristik Sx2 verbessert werden. Dazu bewegt sich das Kraftfahrzeug 1, wie in Fig. 5 gezeigt, auf der Fahrbahn 16. In Fig. 2 sind der Übersichtlichkeit halber nur die Sendecharakteristiken Sx1, Sx2 der ersten und der zweiten Sendeantenne Tx1, Tx2 in Elevation gezeigt. Die Empfangscharakteristiken Dx1, Dx2, Dx3, Dx4 in Elevation E können wie in Fig. 4 gezeigt ausgebildet sein. Die Nullstelle N in der zweiten Sendecharakteristik Sx2 ist dabei entlang einer Nullwertsrichtung 14 orientiert, welche einen bestimmten Nullwertswinkel 13 zu der Hauptstrahlrichtung HSx2 der zweiten Sendeantenne aufweist. Die Nullstelle N trifft dabei in einem bestimmten, durch den Nullwertswinkel 13 vorgegebenen Abstand 15 auf der Fahrbahn 16. Gemäß dieser Ausführungsform kann ein Elevationswinkel von bodennahen Objekten O1, O2 bestimmt werden, wodurch die Objekte O1, O2 klassifiziert werden können. Das Objekt O1 ist im vorliegenden Fall ein Gullideckel und stellt kein Hindernis für das Kraftfahrzeug 1 dar. Das Objekt O1 ist für das Kraftfahrzeug 1 überfahrbar. Das Objekt O2 ist im vorliegenden Fall ein zu der Fahrbahn beabstandetes Objekt, beispielsweise ein Karosserieteil eines anderen Fahrzeugs, und stellt ein Hindernis für das Kraftfahrzeug 1 dar. Das Objekt O2 ist für das Kraftfahrzeug 1 nicht überfahrbar. Zur Klassifizierung der Objekte O1, O2 bewegt sich das Kraftfahrzeug 1 auf die Objekte O1, O2 zu. Das Objekt O1 wird dabei die Nullstelle N früher betreten als das Objekt O2. Der Nullstelleneintritt ist dabei anhand eines Signaleinbruchs im Empfangssignal, welches dem an den Objekten O1, O2 reflektieren Sendesignal der zweiten Sendeantenne Tx2 entspricht, erkennbar. Der Signaleinbruch in dem Empfangssignal wird also bei dem ersten Objekt O1 bei einem geringeren Abstandswert aufweisen als bei dem zweiten Objekt O2. Anhand des Abstandswertes des Signaleinbruchs in dem Empfangssignal kann die Elevation der Objekte O1, O2 erfasst werden. Durch Vergleich des Elevationswertes mit einem vorbestimmten Schwellwert können die Objekte O1, O2 dann klassifiziert werden. Durch Orientieren der zweiten Sendecharakteristik Sx2 schräg nach oben in Richtung des Himmels können entsprechend unterfahrbare Objekte, wie Schilderbrücken, erkannt werden.

Darüber hinaus kann mittels der Antennenkonfiguration 8 eine Blockierung der Radarsensoreinrichtung 4 erkannt werden. Bei einer Blockierung, beispielsweise durch einen Verschmutzungsbelag oder eine Eisschicht, wird die Radarsensoreinrichtung 4 beim zuverlässigen Aussenden und/oder Empfangen der Radarsignale behindert. Auch kann eine vertikale Dejustierung der Radarsensoreinrichtung 4 erkannt werden. Die vertikale Dejustage ist die Abweichung einer vertikalen Blickrichtung der Radarsensoreinrichtung 4 von einer vorbestimmten Blickrichtung. Es wird also die Blockierungserkennung und die Dejustageerkennung mit derselben Antennenkonfiguration 8 durchgeführt, welche auch für die Erfassung der Relativgeschwindigkeit, der Entfernung sowie der Winkel des Objektes eingesetzt wird. Bei einer erfassten Blockierung und/oder Dejustage der Radarsensoreinrichtung 4 kann ein Warnsignal beziehungsweise eine Fehlermeldung an einen Fahrer des Kraftfahrzeugs 1 ausgegeben werden.

Zur Auswertung der Blockierungserkennung und der Überwachung der vertikalen Justage der Radarsensoreinrichtung 4 können nun speziell Detektionen betrachtet werden, welche durch die zweite Sendeantenne Tx2 und die zweite Empfangsantenne Rx2 gewonnen werden. Anders ausgedrückt wird von der zweiten Empfangsantenne Rx2 ein von der zweiten Sendeantenne Tx2 ausgesendetes und an dem Boden 16 reflektiertes Sendesignal als Empfangssignal empfangen. Ob das Empfangssignal von einer Reflexion am Boden 16 stammt, kann an dieser Stelle bereits durch einen Vergleich der von den vier Empfangsantennen Rx1 bis Rx4 gemessenen Empfangsleistungen sowie anhand der erfassten Distanz beziehungsweise Entfernung mit einer gewissen Wahrscheinlichkeit abgeschätzt werden. Falls die Reflexion tatsächlich vom Boden 16 stammt, kann insbesondere davon ausgegangen werden, dass nur von Empfangsantenne Rx2 genügend Leistung für eine Detektion vorhanden ist und eine Winkelmessung mit Hilfe von digitalem Beamforming über alle Empfangsantennen Rx1 bis Rx4 nicht möglich ist. Für die Detektion der Bodenreflexion stehen somit als Informationen insbesondere nur die Entfernung und die relative Geschwindigkeit aus der Doppler-Messung zur Verfügung.

Für die Auswertung der gewonnenen Detektionen vom Boden 16 wird folgender Zusammenhang genutzt, welcher gilt, da der Boden 16 ein stationäres Objekt darstellt:

$$\frac{v_r}{v_h} = \cos(\Psi)$$

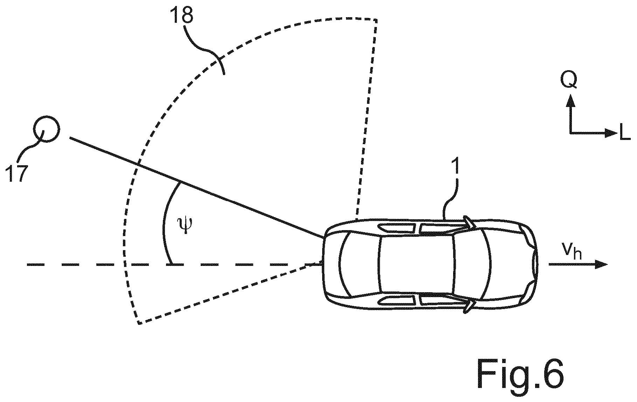

Dieser Zusammenhang ist anhand von Fig. 6 veranschaulicht, in welcher das Kraftfahrzeug 1 bei der Erfassung eines stationären Infrastrukturobjektes 17 gezeigt ist. $v_r$ ist dabei die gemessene Radialgeschwindigkeit des Infrastrukturobjektes 17 und $v_h$ die Geschwindigkeit des Kraftfahrzeugs 1 über Grund. Die Geschwindigkeit $v_h$ des Kraftfahrzeugs 1 kann von einem fahrzeugseitigen Geschwindigkeitssensor erfasst werden. Der Azimutwinkel $\Psi$ kann in Bezug auf eine Referenz von 0° entgegen de r Fahrtrichtung angegeben werden.

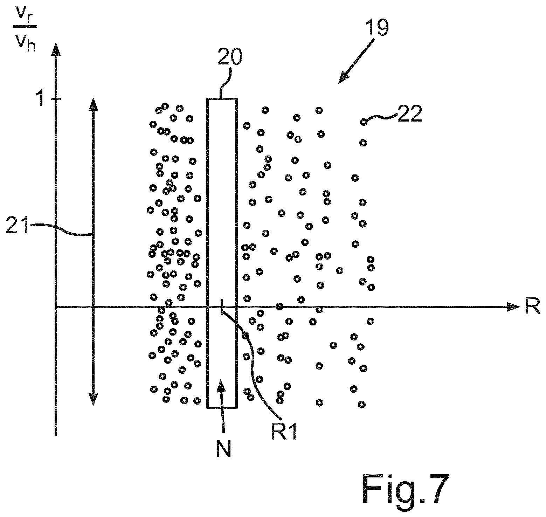

Zur Erkennung der möglichen Blockierung der Radarsensoreinrichtung 4 sowie zur Überwachung der vertikalen Justage wird die Verteilung des Verhältnisses $v_r/v_h$ der Detektionen über die Entfernung R betrachtet. Für einen am Heckbereich 7 des Kraftfahrzeugs 1 verbauten, schräg nach hinten blickenden Radarsensor 4 kann sich die in Fig. 7 gezeigte Detektionspunkteverteilung 19 beziehungsweise Punktewolke ergeben, wobei jeder Detektionspunkt 22 eine Bodenreflexion darstellt (positive Geschwindigkeiten entsprechen dabei einem sich entfernenden Objekt). Eine Ausdehnung 21 der Detektionspunkteverteilung 19 entlang der $v_r/v_h$ -Richtung wird durch einen Sichtbereich der Sensoreinrichtung 4 im Azimut A begrenzt. Eine in Fig. 7 gezeigte obere Begrenzung der Detektionspunkteverteilung 19 (in der $v_r/v_h$-Richtung) weist bei einer schräg nach hinten blickenden Radarsensoreinrichtung 4 den Wert "1" auf, welcher dem Azimutwinkel $\Psi$ von 0° entspricht. Positive und negative Azimutwinkel $\Psi$ können in der Detektionspunkteverteilung 19 nicht unterschieden werden. Eine in Fig. 7 gezeigte untere Begrenzung der Detektionspunkteverteilung 19 (entgegen der $v_r/v_h$-Richtung) ist durch den maximalen Erfassungswinkel der Radarsensoreinrichtung 4 zur Seite gegeben. In einer in Fig. 7 gezeigten horizontalen Richtung (R-Richtung) enthält die Detektionspunkteverteilung 19 Detektionen 22 für alle Entfernungen R, in denen eine Reflexion des Sendesignals vom Boden 16 auftritt. Die Detektionspunkteverteilung 19 ist der gewissen Entfernung R1 durch einen Bereich 20 unterbrochen, in dem keine Detektionspunkte 22 auftreten. Diese Entfernung R1 entspricht dem in Fig. 6 gezeigten Abstand 15, in welchem die Nullstelle N der Sendecharakteristik Sx2 der zweiten Sendeantenne Tx2 auf den Boden 16 auftrifft. Dabei kann über einen vorbestimmten Zeitraum, beispielsweise wenige Minuten, die Detektionspunkteverteilung 19 ausgewertet werden.

Für die Blockierungserkennung wird die Ausdehnung 21 der Detektionspunkteverteilung 19 entlang der $v_r/v_h$-Richtung bestimmt. Insbesondere wird gleichzeitig überprüft, ob kontinuierlich über den gesamten erfassten Entfernungsbereich Detektionen 22 vorhanden sind. Falls die Ausdehnung 21 der Detektionspunkteverteilung 19 nicht dem Sichtbereich der Radarsensoreinrichtung 4 entspricht und/oder nicht über den gesamten erfassten Entfernungsbereich in R-Richtung kontinuierlich Detektionen 22 vorhanden sind, wird die Blockierung der Radarsensoreinrichtung 4 erkannt. Dabei kann auch ein Grad der Blockierung und/oder blockierte Winkelbereiche des Sichtbereiches der Radarsensoreinrichtung 4 ermittelt werden.

Die vertikale Justage der Radarsensoreinrichtung 4 wird überprüft, indem die Entfernung R1 desjenigen Bereiches 20 (beziehungsweise dessen Schwerpunkt) erfasst wird, in der keine Detektionen 22 auftreten. Diese Entfernung R1 wird mit einem vorbestimmten Referenzwert verglichen. Weicht der ermittelte Wert der Entfernung R1 um mehr als eine gewisse Toleranzschwelle von dem Referenzwert ab, so wird die vertikale Dejustage erkannt. Der Referenzwert kann beispielsweise ein Entfernungswert sein, welcher durch Erfassen des Abstandes des Nullstelle N zu dem Kraftfahrzeug 1 für einen am Kraftfahrzeug 1 korrekt justierten Radarsensor 4 bestimmt und hinterlegt ist.

Für zusätzlich statistische Analysen, beispielsweise zur Analyse von Reflexionen an weiteren stationären Objekten wie Leitplanken oder Brücken, können die aus den anderen Empfangskanälen gewonnenen Detektionspunkteverteilungen verwendet werden. Somit kann die Zuverlässigkeit des Verfahrens weiter verbessert werden.

**Patentansprüche**

1. Radarsensoreinrichtung (4) für ein Kraftfahrzeug (1) zum Erfassen eines Objektes (O1, O2) in einem Umgebungsbereich (6) des Kraftfahrzeugs (1), mit einer Steuereinrichtung (3) und einer Antennenkonfiguration (8) aufweisend zumindest zwei Sendeantenne (Tx1, Tx2) zum Aussenden von Sendesignalen, wobei jeweilige Hauptstrahlrichtungen (HSx1, HSx2) von Sendecharakteristiken (Sx1, Sx2) der zumindest zwei Sendeantennen (Tx1, Tx2) unterschiedliche Elevationswinkel ($\Omega$) und unterschiedliche Azimutwinkel ($\Psi$) aufweisen, wobei die Antennenkonfiguration (8) zumindest zwei, zu den Sendeantennen (Tx1, Tx2) separate Empfangsantennen (Rx1, Rx2) zum Empfangen der in dem Umgebungsbereich (6) reflektierten Sendesignale als Empfangssignale aufweist, wobei jeweilige Hauptstrahlrichtungen (HDx1, HDx2) von Empfangscharakteristiken (Dx1, Dx2) der zumindest zwei Empfangsantennen (Rx1, Rx2) unterschiedliche Elevationswinkel ($\Omega$) aufweisen, wobei eine erste Hauptstrahlrichtung (HDx1) einer ersten Empfangscharakteristik (Dx1) einer ersten Empfangsantenne (Rx1) einen ersten Elevationswinkel ($\Omega$) von 0° bezüglich einer parallel zu einer Fahrbahn (16) des Kraftfahrzeugs (1) orientierten Bezugsachse aufweist und eine zweite Hauptstrahlrichtung (HDx2) einer zweiten Empfangscharakteristik (Dx2) einer zweiten Empfangsantenne (Rx2) einen jeweiligen zweiten, von 0° unterschiedlichen Elevationswinkel ($\Omega$) aufweist, wobei die entlang der zweiten Hauptstrahlrichtung (HSx2) orientierte zweite Sendecharakteristik (Sx2) der zweiten Sendeantenne (Tx2) eine Nullstelle (N) bei einem vorbestimmten Nullwertswinkel (13) aufweist, und wobei die Nullstelle (N) bei dem vorbestimmten Nullwertswinkel (13) erzeugt wird, indem mehrere Sendeantennenelemente der zweiten Sendeantenne mit unterschiedlichen Phasen angesteuert werden, **dadurch gekennzeichnet, dass** das Objekt (O1, O2) die Nullstelle (N) betritt, indem sich das Kraftfahrzeug (1) mit der Radarsensoreinrichtung auf das Objekt (O1, O2) zubewegt und das Objekt (O1, O2) dabei in einem bestimmten Abstand zum Kraftfahrzeug (1), welcher abhängig ist von dem Elevationswinkel des Objektes (O1, O2), aus der Sendecharakteristik (Sx2) der zweiten Sendeantenne (Tx2) in die Nullstelle (N) übergeht, wobei das Übergehen des Objekts (O1, O2) anhand eines Einbruchs der Signalamplitude im Empfangssignal bestimmt wird, und dass die Steuereinrichtung (3) dazu ausgelegt ist, einen Elevationswinkel des Objekts (O1, O2) bei Eintreten des Objektes (O1, O2) in die Nullstelle (N) anhand des von zumindest einer der Empfangsantennen (Rx1, Rx2, Rx3, Rx4) empfangenen Empfangssignals, des bestimmten Abstands zum Kraftfahrzeug (1) und des vorbestimmten Nullwertswinkels (13) zu bestimmen.

2. Radarsensoreinrichtung (4) nach Anspruch 1, **dadurch gekennzeichnet, dass** Azimutwinkel ($\Psi$) der jeweiligen Hauptstrahlrichtungen (HDx1, HDx2) der Empfangscharakteristiken (Dx1, Dx2) der zumindest zwei Empfangsantennen (Rx1, Rx2) gleich ausgebildet sind.

3. Radarsensoreinrichtung (4) nach Anspruch 1 oder 2, **dadurch gekennzeichnet, dass** eine erste Hauptstrahlrichtung (HSx1) einer ersten Sendecharakteristik (Sx1) einer ersten Sendeantennen (Tx1) einen ersten Elevationswinkel ($\Omega$) von 0 ° bezüglich einer parallel zu einer Fahrbahn (16) des Kraftfahrzeugs (1) orientierten Bezugsachse und eine zweite Hauptstrahlrichtung (HSx2) einer zweiten Sendecharakteristik (Sx2) einer zweiten Sendeantennen (Tx2) einen jeweiligen zweiten, von 0° unterschiedlichen Elevationswinkel ($\Omega$) aufweist.

4. Radarsensoreinrichtung (4) nach einem der vorhergehenden Ansprüche, **dadurch gekennzeichnet, dass** ein vertikaler Öffnungswinkel der zweiten Empfangscharakteristik (Dx2) größer ausgebildet ist als ein vertikaler Öffnungswinkel der ersten Empfangscharakteristik (Dx1).

5. Radarsensoreinrichtung (4) nach einem der vorhergehenden Ansprüche, **dadurch gekennzeichnet, dass** ein Elevationswinkelunterschied zwischen den Hauptstrahlrichtungen (HDx1, HDx2) der ersten und der zweiten Empfangscharakteristik (Dx1, Dx2) und/oder ein vertikaler Öffnungswinkel der zweiten Empfangscharakteristik (Dx2) bezüglich eines vertikalen Öffnungswinkels der ersten Empfangscharakteristik (Dx1) so ausgebildet ist, dass ein von der zweiten Empfangsantenne (Rx2) empfangenes Empfangssignal höchstens eine Dämpfung (12) von 6dB gegenüber einem von der ersten Empfangsantenne (Rx1) empfangenen Empfangssignal aufweist.

6. Radarsensoreinrichtung (4) nach einem der vorhergehenden Ansprüche, **dadurch gekennzeichnet, dass** die Antennenkonfiguration (8) eine dritte und eine vierte Empfangsantenne (Rx3, Rx4) aufweist, wobei eine dritte und eine vierte Hauptstrahlrichtung (HDx3, HDx4) von Empfangscharakteristiken (Dx3, Dx4) der dritten und vierten Empfangsantenne (Rx3, Rx4) den ersten Elevationswinkel ($\Omega$) aufweisen, und wobei die Azimutwinkel ($\Psi$) der Haupt-

strahlrichtungen (HDx1, HDx2, HDx3, HDx4) aller Empfangscharakteristiken (Dx1, Dx2, Dx3, Dx4) sowie horizontale Öffnungswinkel aller Empfangscharakteristiken (Dx1, Dx2, Dx3, Dx4) gleich ausgebildet sind.

7. Radarsensoreinrichtung (4) nach einem der vorhergehenden Ansprüche,
**dadurch gekennzeichnet, dass**
die Antennenkonfiguration (8) eine dritte Sendeantenne (Tx3) aufweist, wobei eine dritte Hauptstrahlrichtung (HSx3) einer dritten Sendecharakteristik (Sx3) den ersten Elevationswinkel ($\Omega$) aufweist, ein Azimutwinkel ($\Psi$) der zweiten Hauptstrahlrichtung (HSx2) der zweiten Sendeantenne (Tx2) zwischen den Azimutwinkeln ($\Psi$) der ersten und der dritten Hauptstrahlrichtung (HSx1, HSx3) liegend ausgebildet ist und wobei ein horizontaler Öffnungswinkel der zweiten Sendecharakteristik (Sx2) größer ist als ein jeweiliger horizontaler Öffnungswinkel der ersten Sendecharakteristik (Sx1) und der dritten Sendecharakteristik (Sx3).

8. Radarsensoreinrichtung (4) nach Anspruch 7, **dadurch gekennzeichnet, dass** der Elevationswinkel des Objektes (O1, O2) durch einen Amplitudenvergleich des reflektierten Sendesignals der zweiten Sendeantenne (Tx2) sowie des reflektierten Sendesignals der dritten Sendeantenne (Tx3), welches keine Nullstelle aufweist, detektiert wird.

9. Radarsensoreinrichtung (4) nach einem der vorhergehenden Ansprüche,
**dadurch gekennzeichnet, dass**
die zweite Hauptstrahlrichtung (HSx2) der zweiten Sendecharakteristik (Sx2) der zweiten Sendeantenne (Tx2) in Richtung einer Fahrbahn (16) des Kraftfahrzeugs (1) schräg nach unten hin orientiert ist und eine Steuereinrichtung (3) der Radarsensoreinrichtung (4) dazu ausgelegt ist, eine Blockierung der Radarsensoreinrichtung (4) anhand einer Ausdehnung (21) und/oder Kontinuität einer Detektionspunkteverteilung (19) in einem von der zweiten Sendeantenne (Tx2) ausgesendeten, an der Fahrbahn (16) reflektierten und von zumindest einer der Empfangsantennen (Rx1, Rx2, Rx3, Rx4) als Empfangssignal empfangenen Sendesignals zu erkennen.

10. Radarsensoreinrichtung (4) nach Anspruch 9,
**dadurch gekennzeichnet, dass**
die Steuereinrichtung (3) dazu ausgelegt ist, anhand der Kontinuität und/oder Ausdehnung der Detektionspunkteverteilung (19) einen Grad der Blockierung der Radarsensoreinrichtung (4) zu erkennen.

11. Radarsensoreinrichtung (4) nach einem der vorhergehenden Ansprüche,
**dadurch gekennzeichnet, dass**
die zweite Hauptstrahlrichtung (HSx2) und die Nullstelle (N) der zweiten Sendecharakteristik (Sx2) der zweiten Sendeantenne (Tx2) in Richtung einer Fahrbahn (16) des Kraftfahrzeugs (1) nach unten hin orientiert sind und eine Steuereinrichtung (3) der Radarsensoreinrichtung (4) dazu ausgelegt ist, eine Fehljustage der Radarsensoreinrichtung (4) anhand eines von der zweiten Sendeantenne (Tx2) ausgesendeten, an der Fahrbahn (16) reflektierten und von zumindest einer der Empfangsantennen (Rx1, Rx2, Rx3, Rx4) als Empfangssignal empfangenen Sendesignals zu erkennen, falls eine Abweichung zwischen einem anhand des Empfangssignals detektierten Abstandswerts (15) der Nullstelle (N) vom Kraftfahrzeug (1) und einem vorbestimmten Referenzwert einen vorbestimmten Schwellwert überschreitet.

12. Radarsensoreinrichtung (4) nach einem der vorhergehenden Ansprüche, **dadurch gekennzeichnet, dass** der Elevationswinkel des Objektes (O1, O2) durch einen Amplitudenvergleich des reflektierten Sendesignals der zweiten Sendeantenne (Tx2) sowie des reflektierten Sendesignals der ersten Sendeantenne (Tx1), welches keine Nullstelle aufweist, detektiert wird.

13. Fahrerassistenzsystem (2) für ein Kraftfahrzeug (1) mit zumindest einer Radarsensoreinrichtung (4) nach einem der vorhergehenden Ansprüche.

14. Kraftfahrzeug (1) mit einem Fahrerassistenzsystem (2) nach Anspruch 14.

15. Verfahren zum Erkennen von Objekten (O1, O2) in einem Umgebungsbereich (6) eines Kraftfahrzeugs (1), bei welchem von zumindest zwei Sendeantenne (Tx1, Tx2) Sendesignale ausgesendet werden, wobei jeweilige Hauptstrahlrichtungen (HSx1, HSx2) von Sendecharakteristiken (Sx1, Sx2) der zumindest zwei Sendeantennen (Tx1, Tx2) unterschiedliche Elevationswinkel ($\Omega$) und unterschiedliche Azimutwinkel ($\Psi$) aufweisen,

wobei von zumindest zwei, zu den Sendeantennen (Tx1, Tx2) separaten Empfangsantennen (Rx1, Rx2) die in dem Umgebungsbereich (6) reflektierten Sendesignale als Empfangssignale empfangen werden, wobei jeweilige Hauptstrahlrichtungen (HDx1, HDx2) von Empfangscharakteristiken (Dx1, Dx2) der zumindest zwei Empfangsantennen (Rx1, Rx2) unterschiedliche Elevationswinkel ($\Omega$) aufweisen, wobei eine erste Hauptstrahlrichtung (HDx1) einer ersten Empfangscharakteristik (Dx1) einer ersten Empfangsantenne (Rx1) einen ersten Elevationswinkel ($\Omega$) von 0° bezüglich einer parallel zu einer Fahrbahn (16) des Kraftfahrzeugs (1) orientierten Bezugsachse aufweist und eine zweite Hauptstrahlrichtung (HDx2) einer zweiten Empfangscharakteristik (Dx2) einer zweiten Empfangsantenne (Rx2) einen jeweiligen zweiten, von 0° unterschiedlichen Elevationswinkel (Ω) aufweist, wobei die entlang der zweiten Hauptstrahlrichtung (HSx2) orientierte zweite Sendecharakteristik (Sx2) der zweiten Sendeantenne (Tx2) eine Nullstelle (N) bei einem vorbestimmten Nullwertswinkel (13) aufweist, und wobei die Nullstelle (N) bei dem vorbestimmten Nullwertswinkel (13) erzeugt wird, indem mehrere Sendeantennenelemente der zweiten Sendeantenne mit unterschiedlichen Phasen angesteuert werde, ,

**dadurch gekennzeichnet, dass** das Objekt (O1, O2) die Nullstelle (N) betritt, indem sich das Kraftfahrzeug (1) mit der Radarsensoreinrichtung auf das Objekt (O1, O2) zubewegt und das Objekt (O1, O2) dabei in einem bestimmten Abstand zum Kraftfahrzeug (1), welcher abhängig ist von dem Elevationswinkel des Objektes (O1, O2), aus der Sendecharakteristik (Sx2) der zweiten Sendeantenne (Tx2) in die Nullstelle (N) übergeht, wobei das Übergehen des Objekts (O1, O2) anhand eines Einbruchs der Signalamplitude im Empfangssignal bestimmt wird, und dass ein Elevationswinkel des Objekts (O1, O2) bei Eintreten des Objektes (O1, O2) in die Nullstelle (N) anhand des von zumindest einer der Empfangsantennen (Rx1, Rx2, Rx3, Rx4) empfangenen Empfangssignals, des bestimmten Abstands zum Kraftfahrzeug (1) und des vorbestimmten Nullwertswinkels (13) zu bestimmen.

**Claims**

1. Radar sensor device (4) for a motor vehicle (1) for sensing an object (O1, O2) in a surrounding region (6) of the motor vehicle (1), comprising a control device (3) and an antenna configuration (8) having at least two transmitting antennas (Tx1, Tx2) for emitting transmitted signals, wherein respective main radiation directions (HSx1, HSx2) of transmission characteristics (Sx1, Sx2) of the at least two transmitting antennas (Tx1, Tx2) have different elevation angles (Ω) and different azimuth angles (Ψ), wherein the antenna configuration (8) has at least two receiving antennas (Rx1, Rx2) separate from the transmitting antennas (Tx1, Tx2) for receiving the transmitted signals reflected in the surrounding region (6) as received signals, wherein respective main radiation directions (HDx1, HDx2) of reception characteristics (Dx1, Dx2) of the at least two receiving antennas (Rx1, Rx2) have different elevation angles (Ω), wherein a first main radiation direction (HDx1) of a first reception characteristic (Dx1) of a first receiving antenna (Rx1) has a first elevation angle (Ω) of 0° with respect to a reference axis oriented parallel to a roadway (16) of the motor vehicle (1) and a second main radiation direction (HDx2) of a second reception characteristic (Dx2) of a second receiving antenna (Rx2) has a respective second elevation angle (Ω) different from 0°, wherein the second transmission characteristic (Sx2) of the second transmitting antenna (Tx2) oriented along the second main radiation direction (HSx2) has a zero point (N) at a predetermined zero value angle (13), and wherein the zero point (N) is generated at the predetermined zero value angle (13) by activating multiple transmitting antenna elements of the second transmitting antenna with different phases,

**characterized in that** the object (O1, O2) enters the zero point (N) by the motor vehicle (1) with the radar sensor device moving towards the object (O1, O2) and the object (O1, O2) passing from the transmission characteristic (Sx2) of the second transmitting antenna (Tx2) into the zero point (N) in this case at a specific distance in relation to the motor vehicle (1), which is dependent on the elevation angle of the object (O1, O2), wherein the passing of the object (O1, O2) is determined on the basis of a drop in the signal amplitude in the received signal, and **in that** the control device (3) is designed for the purpose of determining an elevation angle of the object (O1, O2) upon entry of the object (O1, O2) into the zero point (N) on the basis of the received signal received by at least one of the receiving antennas (Rx1, Rx2, Rx3, Rx4), the determined distance in relation to the motor vehicle (1) and the predetermined zero value angle (13).

2. Radar sensor device (4) according to Claim 1, **characterized in that** azimuth angles (Ψ) of the respective main radiation directions (HDx1, HDx2) of the reception characteristics (Dx1, Dx2) of the at least two receiving antennas (Rx1, Rx2) are formed identically.

3. Radar sensor device (4) according to Claim 1 or 2, **characterized in that** a first main radiation direction (HSx1) of a first transmission characteristic (Sx1) of a first transmitting antenna (Tx1) has a first elevation angle (Ω) of 0° with respect to a reference axis oriented parallel to a roadway (16) of the motor vehicle (1) and a second main radiation direction (HSx2) of a second transmission characteristic (Sx2) of a second transmitting antenna (Tx2) has a respective second elevation angle (Ω) different from 0°.

4. Radar sensor device (4) according to one of the preceding claims,

**characterized in that**
a vertical aperture angle of the second reception characteristic (Dx2) is formed so as to be larger than a vertical aperture angle of the first reception characteristic (Dx1).

5. Radar sensor device (4) according to one of the preceding claims,
**characterized in that**
an elevation angle difference between the main radiation directions (HDx1, HDx2) of the first and the second reception characteristics (Dx1, Dx2) and/or a vertical aperture angle of the second reception characteristic (Dx2) with respect to a vertical aperture angle of the first reception characteristic (Dx1) is formed such that a received signal received by the second receiving antenna (Rx2) has at most an attenuation (12) of 6 dB in relation to a received signal received by the first receiving antenna (Rx1).

6. Radar sensor device (4) according to one of the preceding claims,
**characterized in that**
the antenna configuration (8) has a third and a fourth receiving antenna (Rx3, Rx4), wherein a third and a fourth main radiation direction (HDx3, HDx4) of reception characteristics (Dx3, Dx4) of the third and fourth receiving antennas (Rx3, Rx4) have the first elevation angle ($\Omega$), and wherein the azimuth angles ($\Psi$) of the main radiation directions (HDx1, HDx2, HDx3, HDx4) of all reception characteristics (Dx1, Dx2, Dx3, Dx4) and horizontal aperture angles of all reception characteristics (Dx1, Dx2, Dx3, Dx4) are formed identically.

7. Radar sensor device (4) according to one of the preceding claims,
**characterized in that**
the antenna configuration (8) has a third transmitting antenna (Tx3), wherein a third main radiation direction (HSx3) of a third transmission characteristic (Sx3) has the first elevation angle ($\Omega$), an azimuth angle ($\Psi$) of the second main radiation direction (HSx2) of the second transmitting antenna (Tx2) is formed lying between the azimuth angles ($\Psi$) of the first and the third main radiation directions (HSx1, HSx3), and wherein a horizontal aperture angle of the second transmission characteristic (Sx2) is greater than a respective horizontal aperture angle of the first transmission characteristic (Sx1) and the third transmission characteristic (Sx3).

8. Radar sensor device (4) according to Claim 7, **characterized in that** the elevation angle of the object (O1, O2) is detected by an amplitude comparison of the reflected transmitted signal of the second transmitting antenna (Tx2) and of the reflected transmitted signal of the third transmitting antenna (Tx3), which has no zero point.

9. Radar sensor device (4) according to one of the preceding claims,
**characterized in that**
the second main radiation direction (HSx2) of the second transmission characteristic (Sx2) of the second transmitting antenna (Tx2) is oriented diagonally downwards in the direction of a roadway (16) of the motor vehicle (1) and a control device (3) of the radar sensor device (4) is designed for the purpose of recognizing a blocking of the radar sensor device (4) on the basis of an extension (21) and/or continuity of a detection point distribution (19) in a transmitted signal, which is emitted by the second transmitting antenna (Tx2), reflected on the roadway (16), and received by at least one of the receiving antennas (Rx1, Rx2, Rx3, Rx4) as a received signal.

10. Radar sensor device (4) according to Claim 9,
**characterized in that**
the control device (3) is designed for the purpose of recognizing a degree of the blocking of the radar sensor device (4) on the basis of the continuity and/or extension of the detection point distribution (19).

11. Radar sensor device (4) according to one of the preceding claims,
**characterized in that**
the second main radiation direction (HSx2) and the zero point (N) of the second transmission characteristic (Sx2) of the second transmitting antenna (Tx2) are oriented downwards in the direction of a roadway (16) of the motor vehicle (1) and a control device (3) of the radar sensor device (4) is designed for the purpose of recognizing a misalignment of the radar sensor device (4) on the basis of a transmitted signal emitted by the second transmitting antenna (Tx2), reflected on the roadway (16), and received by at least one of the receiving antennas (Rx1, Rx2, Rx3, Rx4) as a received signal if a deviation between a distance value (15) of the zero point (N) from the motor vehicle (1) detected on the basis of the received signal and a predetermined reference value exceeds a predetermined threshold value.

12. Radar sensor device (4) according to one of the preceding claims, **characterized in that** the elevation angle of the object (O1, O2) is detected by an amplitude comparison of the reflected transmitted signal of the second transmitting antenna (Tx2) and of the reflected transmitted signal of the first transmitting antenna (Tx1), which has no zero point.

13. Driver assistance system (2) for a motor vehicle (1) comprising at least one radar sensor device (4) according to one of the preceding claims.

**14.** Motor vehicle (1) comprising a driver assistance system (2) according to Claim 14.

**15.** Method for recognizing objects (O1, O2) in a surrounding region (6) of a motor vehicle (1), in which transmitted signals are emitted by at least two transmitting antennas (Tx1, Tx2), wherein respective main radiation directions (HSx1, HSx2) of transmission characteristics (Sx1, Sx2) of the at least two transmitting antennas (Tx1, Tx2) have different elevation angles (Ω) and different azimuth angles (Ψ),

wherein the transmitted signals reflected in the surrounding region (6) are received as received signals by at least two receiving antennas (Rx1, Rx2) separate from the transmitting antennas (Tx1, Tx2), wherein respective main radiation directions (HDx1, HDx2) of reception characteristics (Dx1, Dx2) of the at least two receiving antennas (Rx1, Rx2) have different elevation angles (Ω), wherein a first main radiation direction (HDx1) of a first reception characteristic (Dx1) of a first receiving antenna (Rx1) has a first elevation angle (Ω) of 0° with respect to a reference axis oriented parallel to a roadway (16) of the motor vehicle (1) and a second main radiation direction (HDx2) of a second reception characteristic (Dx2) of a second receiving antenna (Rx2) has a respective second elevation angle (Ω) different from 0°, wherein the second transmission characteristic (Sx2) of the second transmitting antenna (Tx2) oriented along the second main radiation direction (HSx2) has a zero point (N) at a predetermined zero value angle (13), and wherein the zero point (N) is generated at the predetermined zero value angle (13) by activating multiple transmitting antenna elements of the second transmitting antenna with different phases, **characterized in that** the object (O1, O2) enters the zero point (N) by the motor vehicle (1) with the radar sensor device moving towards the object (O1, O2) and the object (O1, O2) passing from the transmission characteristic (Sx2) of the second transmitting antenna (Tx2) into the zero point (N) in this case at a specific distance in relation to the motor vehicle (1), which is dependent on the elevation angle of the object (O1, O2), wherein the passing of the object (O1, O2) is determined on the basis of a drop in the signal amplitude in the received signal, and **in that** an elevation angle of the object (O1, O2) to determine upon entry of the object (O1, O2) into the zero point (N) on the basis of the received signal received by at least one of the receiving antennas (Rx1, Rx2, Rx3, Rx4), the determined distance in relation to the motor vehicle (1) and the predetermined zero value angle (13).

**Revendications**

**1.** Dispositif (4) de détection radar pour un véhicule automobile (1) destiné à détecter un objet (O1, O2) dans une zone environnante (6) du véhicule automobile (1), comprenant un dispositif de commande (3) et une configuration d'antennes (8) comportant au moins deux antennes d'émission (Tx1, Tx2) destinées à émettre des signaux d'émission, les directions de faisceau principal respectives (HSx1, HSx2) des caractéristiques d'émission (Sx1, Sx2) desdites au moins deux antennes d'émission (Tx1, Tx2) présentant des angles d'élévation différents (Ω) et des angles d'azimut différents (Ψ), la configuration d'antenne (8) comprenant au moins deux antennes de réception (Rx1, Rx2) séparées des antennes d'émission (Tx1, Tx2) pour recevoir les signaux d'émission réfléchis dans la zone environnante (6) en tant que signaux de réception, les directions principales des faisceaux (HDx1, HDx2) des caractéristiques de réception (Dx1, Dx2) desdites au moins deux antennes de réception (Rx1, Rx2) présentant des angles d'élévation (Ω) différents, une première direction principale de faisceau (HDx1) d'une première caractéristique de réception (Dx1) d'une première antenne de réception (Rx1) présentant un premier angle d'élévation (Ω) de 0° par rapport à un axe de référence orienté parallèlement à une chaussée (16) du véhicule automobile (1) et une deuxième direction principale de faisceau (HDx2) d'une deuxième caractéristique de réception (Dx2) d'une deuxième antenne de réception (Rx2) présentant un deuxième angle d'élévation (Ω) respectif différent de 0°, la deuxième caractéristique d'émission (Sx2) de la deuxième antenne d'émission (Tx2) orientée selon la deuxième direction principale de faisceau (HSx2) présentant un point zéro (N) à un angle de valeur zéro (13) prédéterminé, et le point zéro (N) étant généré à l'angle de valeur zéro (13) prédéterminé en commandant plusieurs éléments d'antenne d'émission de la deuxième antenne d'émission avec des phases différentes, **caractérisé en ce que** l'objet (O1, O2) entre dans le point zéro (N) lorsque le véhicule automobile (1) équipé du dispositif de détection radar se déplace vers l'objet (O1, O2) et que l'objet (O1, O2) passe alors, à une distance déterminée du véhicule automobile (1) qui dépend de l'angle d'élévation de l'objet (O1, O2), passe dans le point zéro (N) à partir de la caractéristique d'émission (Sx2) de la deuxième antenne d'émission (Tx2), le passage de l'objet (O1, O2) étant déterminé au moyen d'une chute de l'amplitude du signal dans le signal reçu, et **en ce que** le dispositif de commande (3) est conçu pour déterminer un angle d'élévation de l'objet (O1, O2) lors de l'entrée de l'objet (O1, O2) dans le point zéro (N) au moyen du signal de réception reçu par au moins une des antennes de réception (Rx1, Rx2, Rx3, Rx4), de la distance déterminée par rapport au véhicule automobile (1) et de l'angle de valeur zéro (13) prédéterminé.

2. Dispositif (4) de détection radar selon la revendication 1,
   **caractérisé en ce que**
   les angles azimutaux (Ψ) des directions respectives principales des faisceaux (HDx1, HDx2) des caractéristiques de réception (Dx1, Dx2) desdites au moins deux antennes de réception (Rx1, Rx2) sont identiques.

3. Dispositif (4) de détection radar selon la revendication 1 ou la revendication 2,
   **caractérisé en ce que**
   une première direction principale de faisceau (HSx1) d'une première caractéristique d'émission (Sx1) d'une première antenne d'émission (Tx1) présente un premier angle d'élévation (Ω) de 0° par rapport à un axe de référence orienté parallèlement à une chaussée (16) du véhicule automobile (1) et une deuxième direction principale de faisceau (HSx2) d'une deuxième caractéristique d'émission (Sx2) d'une deuxième antenne d'émission (Tx2) présente un deuxième angle d'élévation (Ω) respectif différent de 0°.

4. Dispositif (4) de détection radar selon l'une des revendications précédentes,
   **caractérisé en ce que**
   **en ce qu'**un angle d'ouverture vertical de la deuxième caractéristique de réception (Dx2) est plus grand qu'un angle d'ouverture vertical de la première caractéristique de réception (Dx1).

5. Dispositif (4) de détection radar selon l'une des revendications précédentes,
   **caractérisé**
   **en ce qu'**une différence d'angle d'élévation entre les directions principales des faisceaux (HDx1, HDx2) de la première et de la deuxième caractéristiques de réception (Dx1, Dx2) et/ou un angle d'ouverture vertical de la deuxième caractéristique de réception (Dx2) par rapport à un angle d'ouverture vertical de la première caractéristique de réception (Dx1) est conçu de telle sorte qu'un signal de réception reçu par la deuxième antenne de réception (Rx2) présente au maximum une atténuation (12) de 6 dB par rapport à un signal de réception reçu par la première antenne de réception (Rx1).

6. Dispositif (4) de détection radar selon l'une des revendications précédentes,
   **caractérisé en ce que**
   la configuration d'antennes (8) comprend une troisième et une quatrième antennes de réception (Rx3, Rx4), une troisième et une quatrième directions principales de faisceaux (HDx3, HDx4) des caractéristiques de réception (Dx3, Dx4) des troisième et quatrième antennes de réception (Rx3, Rx4) présentant le premier angle d'élévation (Ω), et les angles azimutaux (Ψ) des directions principales de faisceaux (HDx1, HDx2, HDx3, HDx4) de toutes les caractéristiques de réception (Dx1, Dx2, Dx3, Dx4) ainsi que les angles d'ouverture horizontaux de toutes les caractéristiques de réception (Dx1, Dx2, Dx3, Dx4) sont identiques.

7. Dispositif (4) de détection radar selon l'une des revendications précédentes,
   **caractérisé en ce que**
   la configuration d'antenne (8) comprend une troisième antenne d'émission (Tx3), une troisième direction principale de faisceau (HSx3) d'une troisième caractéristique d'émission (Sx3) présentant le premier angle d'élévation (Ω), un angle azimutal (Ψ) de la deuxième direction principale de faisceau (HSx2) de la deuxième antenne d'émission (Tx2) est formé entre les angles azimutaux (Ψ) des première et troisième directions principales de faisceau (HSx1, HSx3), et un angle d'ouverture horizontal de la deuxième caractéristique d'émission (Sx2) est supérieur à un angle d'ouverture horizontal respectif de la première caractéristique d'émission (Sx1) et de la troisième caractéristique d'émission (Sx3).

8. Dispositif (4) de détection radar selon la revendication 7, **caractérisé en ce que** l'angle d'élévation de l'objet (O1, O2) est détecté par une comparaison d'amplitude entre le signal d'émission réfléchi par la deuxième antenne d'émission (Tx2) et le signal d'émission réfléchi par la troisième antenne d'émission (Tx3), qui ne présente aucun point zéro.

9. Dispositif (4) de détection radar selon l'une des revendications précédentes,
   **caractérisé en ce que**
   la deuxième direction principale de faisceau (HSx2) de la deuxième caractéristique d'émission (Sx2) de la deuxième antenne d'émission (Tx2) est orientée vers le bas en biais en direction d'une chaussée (16) du véhicule automobile (1) et un dispositif de commande (3) du dispositif (4) de détection radar est conçu pour bloquer le dispositif (4) de détection radar sur la base d'une extension (21) et/ou d'une continuité d'une répartition de points de détection (19) dans un signal d'émission émis par la deuxième antenne d'émission (Tx2) réfléchie sur la chaussée (16) et reçue par au moins une des antennes de réception (Rx1, Rx2, Rx3, Rx4) en tant que signal de réception.

10. Dispositif (4) de détection radar selon la revendication 9,

**caractérisé en ce que**
le dispositif de commande (3) est conçu de manière à détecter un degré de blocage du dispositif (4) de détection radar en fonction de la continuité et/ou de l'étendue de la répartition des points de détection (19).

11. Dispositif (4) de détection radar selon l'une des revendications précédentes,
   **caractérisé en ce que**
   la deuxième direction principale de faisceau (HSx2) et le point zéro (N) de la deuxième caractéristique d'émission (Sx2) de la deuxième antenne d'émission (Tx2) sont orientés vers le bas en direction d'une chaussée (16) du véhicule automobile (1), et un dispositif de commande (3) du dispositif (4) de détection radar est conçu pour détecter un mauvais réglage du dispositif (4) de détection radar sur la base d'un signal d'émission émis par la deuxième antenne d'émission (Tx2), réfléchi sur la chaussée (16) et reçu par au moins une des antennes de réception (Rx1, Rx2, Rx3, Rx4) en tant que signal de réception, lorsqu'un écart entre une valeur de distance (15) du point zéro (N) par rapport au véhicule automobile (1), détectée au moyen du signal de réception, et une valeur de référence prédéterminée, dépasse une valeur seuil prédéterminée.

12. Dispositif (4) de détection radar selon l'une des revendications précédentes, **caractérisé en ce que** l'angle d'élévation de l'objet (O1, O2) est détecté par une comparaison d'amplitude entre le signal d'émission réfléchi par la deuxième antenne d'émission (Tx2) et le signal d'émission réfléchi par la première antenne d'émission (Tx1), qui ne présente pas de point zéro.

13. Système d'aide à la conduite (2) pour un véhicule automobile (1) avec au moins un dispositif (4) de détection radar selon l'une des revendications précédentes.

14. Véhicule automobile (1) équipé d'un système d'aide à la conduite (2) selon la revendication 14.

15. Procédé de détection d'objets (O1, O2) dans une zone environnante (6) d'un véhicule automobile (1), dans lequel des signaux d'émission sont émis par au moins deux antennes d'émission (Tx1, Tx2), les directions de faisceau principal respectives (HSx1, HSx2) des caractéristiques d'émission (Sx1, Sx2) desdites au moins deux antennes d'émission (Tx1, Tx2) présentant des angles d'élévation ($\Omega$) différents et des angles d'azimut ($\Psi$) différents, les signaux d'émission réfléchis dans la zone environnante (6) étant reçus en tant que signaux de réception par au moins deux antennes de réception (Rx1, Rx2) distinctes des antennes d'émission (Tx1, Tx2), les directions principales des faisceaux (HDx1, HDx2) des caractéristiques de réception (Dx1, Dx2) desdites au moins deux antennes de réception (Rx1, Rx2) présentant des angles d'élévation ($\Omega$) différents, une première direction principale de faisceau (HDx1) d'une première caractéristique de réception (Dx1) d'une première antenne de réception (Rx1) présentant un premier angle d'élévation ($\Omega$) de 0° par rapport à un axe de référence orienté parallèlement à une chaussée (16) du véhicule automobile (1) et une deuxième direction principale de faisceau (HDx2) d'une deuxième caractéristique de réception (Dx2) d'une deuxième antenne de réception (Rx2) présente un deuxième angle d'élévation ($\Omega$) respectif différent de 0°, la deuxième caractéristique d'émission (Sx2) de la deuxième antenne d'émission (Tx2) orientée le long de la deuxième direction principale de faisceau (HSx2) présentant un point zéro (N) à un angle de valeur nulle (13) prédéterminé, et le point zéro (N) étant généré à l'angle de valeur nulle (13) prédéterminé en commandant plusieurs éléments d'antenne d'émission de la deuxième antenne d'émission avec des phases différentes, **caractérisé en ce que** l'objet (O1, O2) entre dans le point zéro (N) lorsque le véhicule automobile (1) équipé du dispositif de détection radar se déplace vers l'objet (O1, O2) et que l'objet (O1, O2) passe alors, à une distance déterminée du véhicule automobile (1) qui dépend de l'angle d'élévation de l'objet (01, O2), dans le point zéro (N) à partir de la caractéristique d'émission (Sx2) de la deuxième antenne d'émission (Tx2), le passage de l'objet (O1, O2) étant déterminé au moyen d'une chute de l'amplitude du signal dans le signal de réception, et **en ce qu'**un angle d'élévation de l'objet (O1, O2) pour déterminer lors de l'entrée de l'objet (O1, O2) dans le point zéro (N) sur la base du signal de réception reçu par au moins une des antennes de réception (Rx1, Rx2, Rx3, Rx4), de la distance déterminée par rapport au véhicule automobile (1) et de l'angle de valeur nulle (13) prédéterminé.

Fig.1

Fig.2

Fig.3b

Fig.3a

Fig.4

Fig.5

EP 3 455 647 B1

Fig.6

Fig.7

**EP 3 455 647 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015028175 A1
- DE 102013216951 A1